# EUROPEAN PATENT SPECIFICATION

(11) **EP 1 834 471 B1**
(45) Date of publication and mention of the grant of the patent: **02.11.2011**
(21) Application number: 05791294.1
(22) Date of filing: 30.09.2005
(51) Int. Cl.: H04M 3/533, H04L 12/54

(54) **METHOD AND SYSTEM TO ENABLE SUBMISSION AND SUBSEQUENT RETRIEVAL OF ENHANCED VOICE MAIL MESSAGES**
VERFAHREN UND SYSTEM ZUR ERMÖGLICHUNG DES EINREICHENS UND NACHFOLGENDEN ABRUFENS VON ERWEITERTEN VOICE-MAIL-NACHRICHTEN
PROCEDE ET SYSTEME PERMETTANT DE SOUMETTRE ET DE RECUPERER ENSUITE DES MESSAGES VOCAUX AMELIORES

(30) Priority: 27.12.2004 US 638386 P
(43) Date of publication of application: 19.09.2007
(73) Proprietor: BCE Inc., Montreal Quebec H3B 4Y7 (CA)
(72) Inventor: CLARK, David, William, Carp, Ontario K0A 1L0 (CA); LAM, Gregory, A., Toronto, Ontario M6S 3E4 (CA); MURRAY, Sean, M., Toronto, Ontario M4V 1T4 (CA)
(74) Representative: Gendron, Vincent Christian
(86) International application number: PCT/CA2005/001517
(87) International publication number: WO 2006/069433

(56) References cited:
- EP-A1- 1 280 326
- US-B1- 6 459 774
- US-B1- 6 633 630
- US-B1- 6 778 644
- US-B2- 6 775 360
- US-B2- 6 795 541

## Description

### CROSS-REFERENCE TO RELATED APPLICATIONS

The subject matter of the present application is also related to the subject matter of United States Patent No. 7,587,033 to Dave Clark et al.*,* entitled "SYSTEMS AND METHODS FOR RENDERING VOICE MAIL CONTACT INFORMATION AVAILABLE TO A CALLED PARTY".

The subject matter of the present application is also related to the subject matter of United States Patent Application Publication No. 2006/0159242 to Dave Clark et al.*,* entitled "SYSTEMS AND METHODS FOR REGISTRATION AND RETRIEVAL, OF VOICE MAIL CONTACT INFORMATION".

### FIELD OF THE INVENTION

The present invention relates generally to telecommunications and, more particularly, to techniques for enhancing voice mail messages with auxiliary content.

### BACKGROUND

Voice mail systems provide a convenient way for a caller to leave a message for an intended recipient who is unavailable to answer an incoming call. Specifically, when the intended recipient is busy or unresponsive to the call, a conventional voice mail system will answer the call and play the intended recipient's audio greeting, Following this, the caller is prompted to record a voice mail message, which is stored as an audio recording in a voice mailbox associated with the intended recipient

When the intended recipient wishes to retrieve the contents of the mailbox at a later time, he or she dials into the voice mail system. The voice mail system authenticates the intended recipient, and subsequently allows the intended recipient, who is the owner of the mailbox, to navigate through his or her mailbox in order to perform various functions, such as playback, deletion and forwarding of individual voice mail messages.

Frequently, the intended recipient may find that they he or she has amassed a large number of voice mail messages in his or her mailbox, with a high variability amongst the messages in duration, relevance and/or importance. The intended recipient must therefore spend a considerable amount of time navigating through the voice mail messages, with no prior knowledge of the relative importance or context of a particular one of these messages. In some cases, this may lead to the intended recipient having wasted valuable time, only to discover that there are few or no voice mail messages requiring his or her immediate attention. Other situations may arise where an intended recipient who defers navigation through the voice mail system until a period of greater availability, may fail to retrieve crucial information in a timely fashion.

U.S. Patent 6,795,541 provides a method, apparatus and system of completing a call when a called party has not answered the call from a calling party. A signal indicating that the called party has not answered the call is detected, and the call is terminated. A message is presented to the calling party that indicates the called party has not answered the call and prompts the calling party to compose a multimedia message to be delivered to the called party. The multimedia message is then sent to a multimedia messaging service server for subsequent delivery to the called party whenever the calling party completes composition of the multimedia message. However, U.S. Patent 6,975,541 still causes problems for the intended recipient, who may have amassed a large number of messages.

Thus, the industry would welcome an improvement that overcomes one or more of the aforementioned deficiencies.

### SUMMARY OF THE INVENTION

According to a first broad aspect, the present Invention seeks to provide a method suitable for execution by a voice mail system for handling a call placed by a caller. The method comprises providing the caller with an opportunity to submit a voice segment destined for an intended recipient; providing the caller with an opportunity to submit an auxiliary electronic message destined for the intended recipient; storing in a mailbox associated with the intended recipient a composite message comprising the voice segment and the auxiliary electronic message; and releasing the auxiliary electronic message to the intended recipient upon interaction with the intended recipient.

According to a second broad aspect, the present invention seeks to provide computer-readable media tangibly embodying a program of instructions executable by a computing device to perform a method of handling a call placed by a caller. The method comprises providing the caller with an opportunity to submit a voice segment destined for an intended recipient; providing the caller with an opportunity to submit an auxiliary electronic message destined for the intended recipient; storing in a mailbox associated with the intended recipient a composite message comprising the voice segment and the auxiliary electronic message; and releasing the auxiliary electronic message to the intended recipient upon interaction with the intended recipient.

According to a third broad aspect, the present invention seeks to provide a voice mail system, comprising a plurality of mailboxes associated with respective users of the voice mail system. Each of the mailboxes comprises a respective set of at least one message. At least one particular message in the mailbox associated with a particular user comprises a respective voice content field and a respective auxiliary content field. The voice content field of the particular message comprises a voice segment submitted by a caller during prior interaction with the voice mail system. The auxiliary content field of the particular message comprises an auxiliary electronic message information submitted by the caller during said prior interaction with the voice mail system. The voice mail system further comprises a control unit operative for interacting with the particular user to allow the particular user to retrieve the voice segment in the voice content field of the particular message as well as the auxiliary electronic message in the auxiliary content field of the particular message.

These and other aspects and features of the present invention will now become apparent to those of ordinary skill in the art upon review of the following description of specific embodiments of the invention in conjunction with the accompanying drawings.

### BRIEF DESCRIPTION OF THE DRAWINGS

In the accompanying drawings:
Figs. 1A through 1E show how a voice mail system can be reached by a caller using various types of devices and in various network architectures;
Fig. 2 is a flowchart showing steps in the operation of the voice mail system when handling a missed call from the caller, in accordance with a possible embodiment of the present invention;
Figs. 3A through 3E show how a mailbox in a voice mail system can be reached by the owner of the mailbox using various types of devices and in various network architectures; and
Figs. 4 and 5 are signal flow diagrams showing steps in the operation of the voice mail system when interacting with the owner of the mailbox, in accordance with two possible embodiments of the present invention.

### DETAILED DESCRIPTION OF EMBODIMENTS

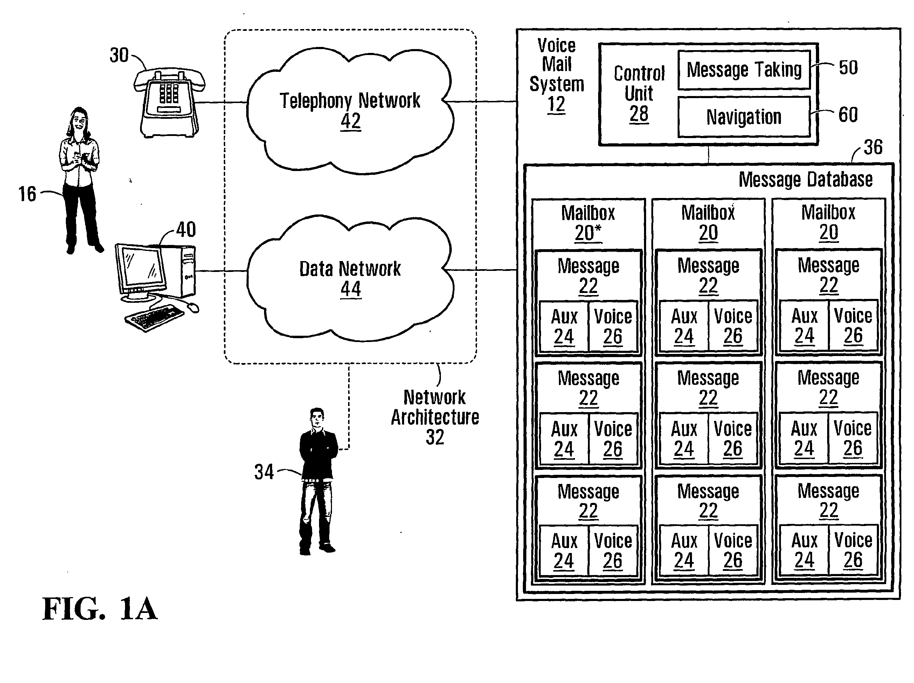

Figs. 1A-1E show a plurality of scenarios in which a caller 16 uses a telephony device 30 to attempt to reach an intended recipient 34 over a network architecture 32. The attempt to reach the intended recipient 34 can be invoked by dialing a telephone number associated with the intended recipient 34. If the intended recipient 34 cannot be reached (e.g., if the intended recipient 34 does not respond after a certain number of rings or a busy signal is detected), the network architecture 32 transfers the call to a voice mail system 12. By interacting with the voice mail system 12, the caller 16 can leave a message for the intended recipient 34.

The voice mail system 12 comprises, or is in communication with, a mailbox database 36 that includes a plurality of mailboxes 20, including a mailbox 20*. Each of the mailboxes 20 in the mailbox database 36 is associated with a respective intended recipient and has the capability of storing one or more respective messages. In the illustrated example, the intended recipient 34 is the owner of mailbox 20*.

### I- Interaction Between Voice Mail System 12 and Caller 16

The voice mail system 12 also comprises a control unit 28 that runs a message taking process 50 for interacting with the caller 16 to allow the caller 16 to leave a message 22 for the intended recipient 34. In accordance with an embodiment of the present invention, the message 22 is in fact a composite message having a voice content field 26 and an auxiliary content field 24. The caller 16 utilizes the telephony device 30 for populating the voice content field 26. In addition, and in accordance with an embodiment of the present invention, an auxiliary device 40 may be used by the caller 16 to populate the auxiliary content field 24. However, it should be noted that other messages 22, although not illustrated as such in the drawings, may contain only the voice content field 26 or only the auxiliary content field 24.

The telephony device 30 may be the same as the auxiliary device 40 or the two devices may be different, as will now become apparent from a discussion of the non-limiting examples in Figs. 1A through 1E.

In the embodiment of Fig. 1A, the network architecture 32 comprises a telephony network 42 such as the PSTN and a data network 44 such as the Internet. In this embodiment, the telephony device 30 can be a conventional telephone connected to the telephony network 42. The auxiliary device 40 can be a computing apparatus with a connection to the data network 44. In some embodiments, the auxiliary device 40 may connect to the data network 44 via the telephony network 42. The voice mail system 12 is connected to both the telephony network 42 and to the data network 44.

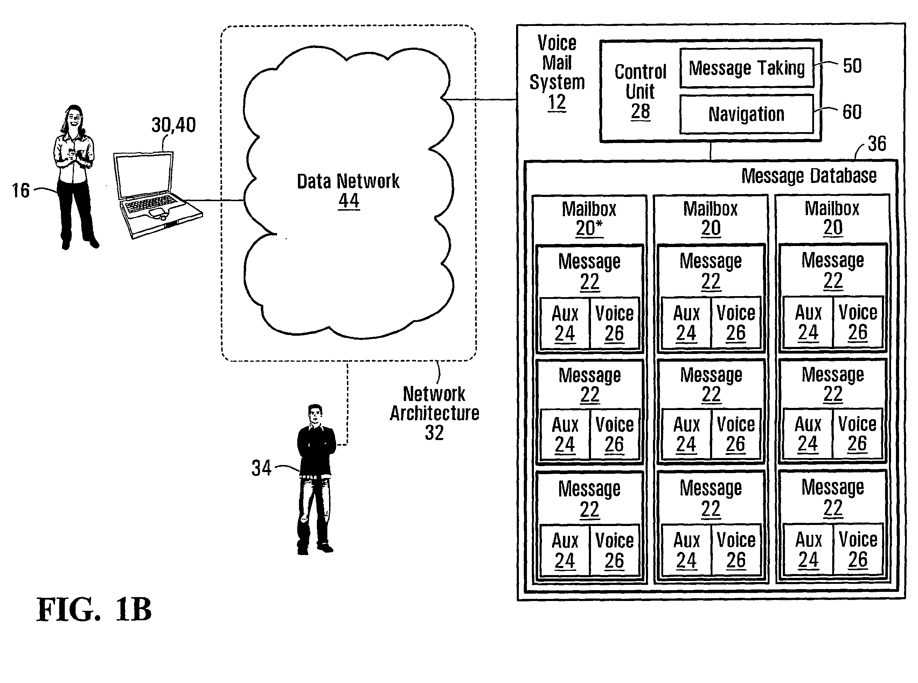

In the embodiment of Fig. 1B, the network architecture 32 comprises a data network 44 such as the Internet. In this embodiment, the telephony device 30 is the same as the auxiliary device 40, and can be referred to as a common device 30, 40. The common device 30, 40 can be a soft client enabled device (e.g., a telephony-enabled desktop, laptop or portable computer) connected to the data network 44. The voice mail system 12 is connected to the data network 44. In some embodiments, the voice mail system 12 and/or the common device 30, 40 may connect to the data network 44 via a telephony network (not shown).

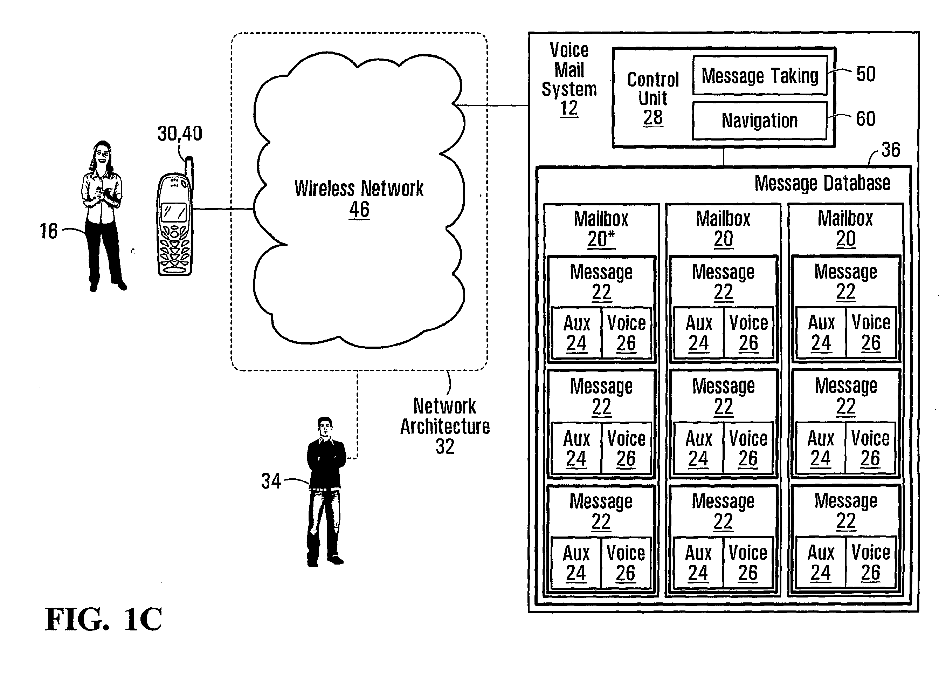

In the embodiment of Fig. 1C, the network architecture 32 comprises a wireless network 46 such as a cellular network. In this embodiment, the telephony device 30 is the same as the auxiliary device 40, and can be referred to as a common device 30, 40. The common device 30, 40 can be a wireless device such as a cellular telephone or a networked personal digital assistant (PDA). The wireless device can have a small screen and a keypad with a plurality of keys. The voice mail system 12 is connected to the wireless network 46. In some embodiments, the voice mail system 12 and/or the common device 30, 40 may connect to the wireless network 46 via a telephony network (not shown).

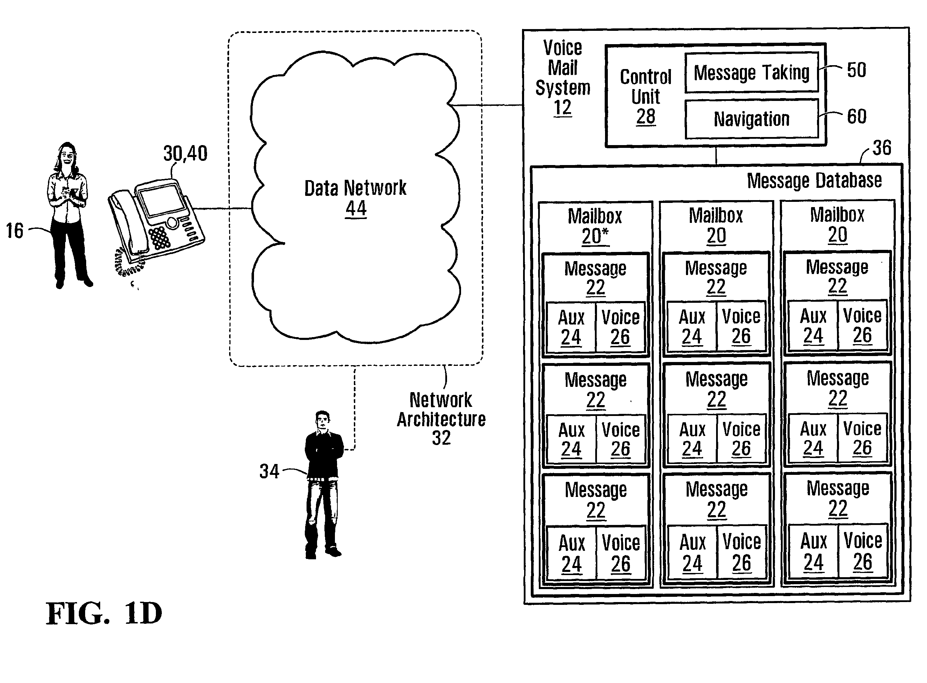

In the embodiment of Fig. 1D, the network architecture 32 comprises a data network 44 such as the Internet. In this embodiment, the telephony device 30 is the same as the auxiliary device 40, and can be referred to as a common device 30, 40. The common device 30, 40 can be an IP phone. The IP phone can have a screen and a plurality of keys, which have different functions depending on the information displayed on the screen. The IP phone may thus implement "soft key" functionality. The voice mail system 12 is connected to the data network 44. In some embodiments, the voice mail system 12 may connect to the data network 44 via a telephony network (not shown).

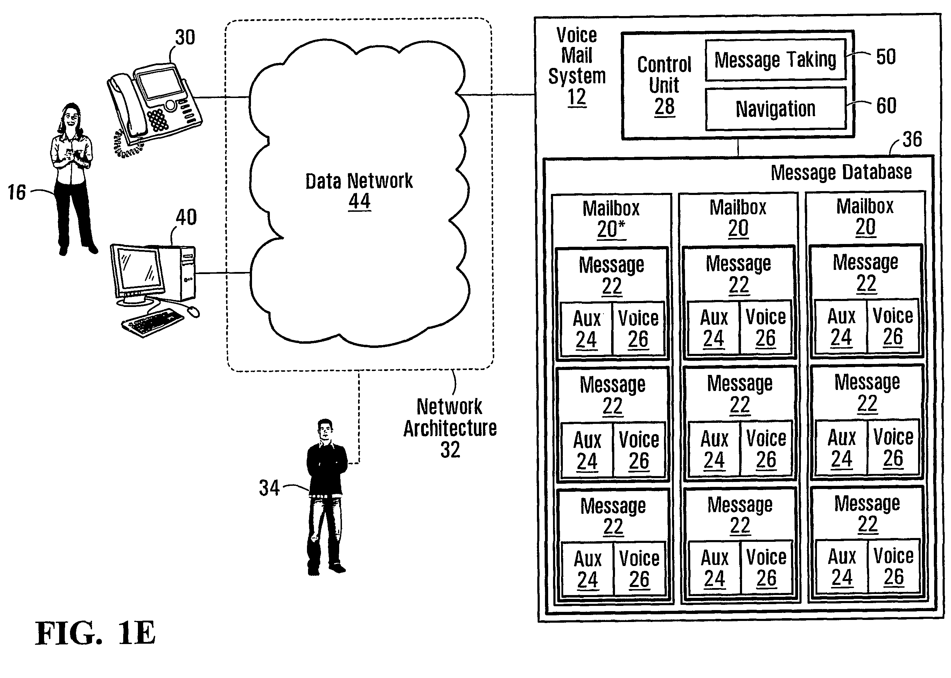

In the embodiment of Fig. 1E, the network architecture 32 comprises a data network 44 such as the Internet. In this embodiment, the telephony device 30 can be an IP phone and the auxiliary device 40 can be a computing apparatus. The voice mail system 12 is connected to the data network 44. In some embodiments, the voice mail system 12 and/or the auxiliary device 40 may connect to the data network 44 via a telephony network (not shown).

As mentioned above, the message taking process 50 is adapted for interacting with the caller 16 to allow the caller 16 to create a message 22 for the intended recipient 34. The message taking process 50, which may be run in hardware, software, control logic or any combination thereof, is now described in greater detail.

### Message Taking Process 50

Firstly, the message taking process 50 interacts with the caller 16 in a known way to allow the caller 16 to record a voice segment for the intended recipient 34. Specifically, the control unit 28 stores the recorded voice segment in the voice content field 26 of a newly created message 22 for the intended recipient 34. In a non-limiting example embodiment, the recorded voice segment can be stored as a computer-readable file in a specific format including but not limited to ".wav" files.

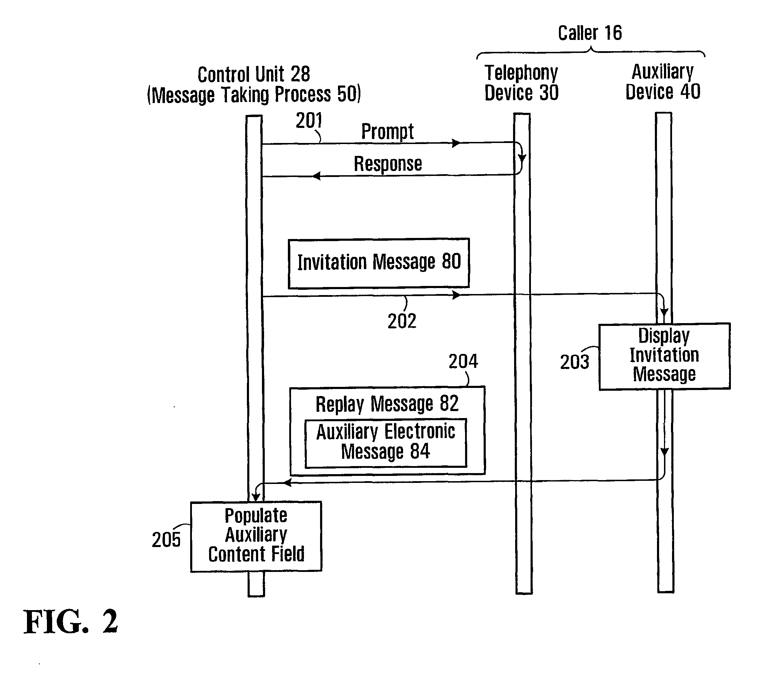

Additionally, and in accordance with embodiments of the present invention, the message taking process 50 interacts with the caller 16 to allow the caller 16 to submit an auxiliary electronic message, which is used to populate the auxiliary content field 24 of the message 22. To this end, and with reference to Fig. 2, the following steps may be performed either before, during or after the caller 16 has recorded a voice segment for the intended recipient 34, thereby allowing the caller 16 to submit an auxiliary electronic message.

It should also be understood that in some cases, the caller 16 may not wish to record a voice segment for the intended recipient 34, and thus the message taking process 50 may proceed directly to the steps described below.

### Step 201

This optional step provides for the control unit 28 to send a prompt (such as a voice prompt) to the caller 16, asking the caller 16 whether the caller 16 would like to submit an auxiliary electronic message. The caller 16 may answer by dialing a DTMF tone (e.g., pressing a button on a telephone) or uttering "yes" or providing another possible response. Upon detecting the response (e.g., using tone detection, speech recognition, etc.) and concluding that the caller 16 indeed wishes to submit an auxiliary electronic message, the control unit 28 passes to step 202.

### Step 202

If the control unit 28 has learned (or otherwise infers) that the caller 16 wishes to submit an auxiliary electronic message, the control unit 28 provides the caller 16 with an opportunity to submit such auxiliary electronic message. For example, the control unit 28 can initiate an interaction with the caller 16 via the auxiliary device 40 by sending an invitation message 80 to electronically invite the caller 16 to submit an auxiliary electronic message. The control unit 28 can send the invitation message 80 in various ways, such as by way of instant message, email message, real-time text message (including SMS), etc., depending on the nature of the auxiliary device 40 (or the combined device 30, 40, if applicable).

In order to allow the caller 16 to receive the invitation message 80 on the auxiliary device 40 (or the combined device 30, 40, if applicable), the control unit 28 needs to know an address of the caller 16 at which the caller 16 can be reached when using the auxiliary device 40 (or the common device 30, 40, if applicable). This address is hereinafter referred to as an "auxiliary address" of the caller 16. The auxiliary address of the caller 16 can be obtained in various ways, depending on the embodiment, as now described.
- Fig. 1A:: The control unit 28 consults a database (not shown) in the voice mail system 12 where the auxiliary address of the caller 16 may be associated with a directory number of the telephony device 30 (when the latter is embodied as a telephone). For its part, the directory number of the telephony device 30 can be obtained using technologies such as caller line identification (CLID). Thus, the control unit 28 learns the directory number of the telephony device 30 and maps it to the auxiliary address of the caller 16. Since in this case the telephony device 30 is different from the auxiliary device 40 (e.g., a computing apparatus), the association between the directory number of the telephony device 30 and the auxiliary address of the caller 16 may be left to the caller 16 to define. Accordingly, this association may be established by way of a prior registration process. This registration process can be initiated by the caller 16 or by a service provider (e.g., telephony service provider or Internet service provider).
- Fig. 1B:: The auxiliary address of the caller 16 can be a MAC address of the common device 30, 40 (e.g., a soft client enabled device). Accordingly, the auxiliary address may be learned from the headers of packets received from the common device 30, 40, which will specify the MAC address of the common device 30, 40.
- Fig. 1C:: The auxiliary address of the caller 16 can be an electronic serial number of the common device 30, 40 (e.g., a cellular phone or networked PDA). Accordingly, the auxiliary address may be learned from the signals received from the common device 30, 40, which will specify the electronic serial number of the common device 30, 40.
- Fig. 1D:: The auxiliary address of the caller 16 can be an IP address of the common device 30, 40 (e.g., an IP phone). Accordingly, the auxiliary address may be learned from the headers of packets received from the common device 30, 40, which will specify the IP address of the common device 30, 40.
- Fig. 1E:: The control unit 28 consults a database (not shown) in the voice mail system 12 where the auxiliary address of the caller 16 may be associated with an IP address of the telephony device 30 (when the latter is embodied as an IP phone). For its part, the IP address of the telephony device 30 can be learned from the headers of packets received from the telephony device 30. Thus, the control unit 28 learns the IP address of the telephony device 30 and maps it to the auxiliary address of the caller 16. Since in this case the telephony device 30 is different from the auxiliary device 40 (e.g., a computing apparatus), the association between the IP address of the telephony device 30 and the auxiliary address of the caller 16 may be left to the caller 16 to define. Accordingly, this association may be established by way of a prior registration process. This registration process can be initiated by the caller 16 or by a service provider (e.g., telephony service provider or Internet service provider).

### Step 203

The auxiliary device 40 (or the common device 30, 40, if applicable) displays the invitation message 80. In a non-limiting example embodiment, this may be done using a pop-up window, browser window or other GUI.

### Step 204

The caller 16 uses the auxiliary device 40 (or the common device 30, 40 if applicable) to respond to the invitation message 80. Specifically, the caller 16 responds by creating an auxiliary electronic message 84, which is then formatted / encapsulated into a reply message 82 and sent to the voice mail system 12.

The auxiliary electronic message 84 may take on a variety of forms, depending on the capabilities of the auxiliary device 40 (or the common device 30, 40, if applicable). In a first suitable non-limiting example, the auxiliary electronic message includes text, which may convey any desired information, such as a context indicator, a URL (uniform resource locator), an alphanumeric code (such as a personal identification number PIN), etc. In a second suitable non-limiting example, the auxiliary electronic message includes a file, which may convey any desired information, such as an electronic business card, an audio segment, a video segment, text, graphics, multimedia, digital signature, etc., or any combination thereof. In a third suitable non-limiting example, the auxiliary electronic message includes a combination of text and a file.

In order to create the auxiliary electronic message 84 and trigger its transmission to the voice mail system 12, the caller 16 may interact with the pop-up window, browser or other GUI that displayed the invitation message at step 203.

### Step 205

The control unit 28 receives the reply message 82 containing the auxiliary electronic message 84 and populates the auxiliary content field 24 of the message 22 with the auxiliary electronic message 84.

### 11- Interaction Between Voice Mail System 12 and Intended Recipient 34

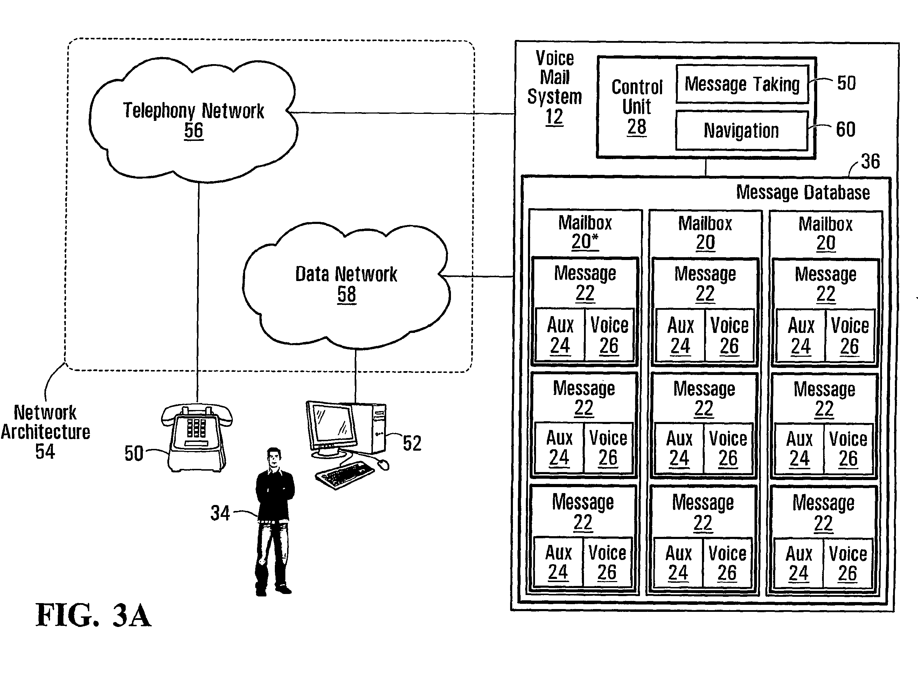

With reference now to Figs. 3A-3E, there is shown a plurality of scenarios in which the intended recipient 34 retrieves his or her messages 22 from the voice mail system 12. The voice mail system 12 is reachable over a network architecture 54 to which the intended recipient 34 is connected by a telephony device 50 and an auxiliary device 52. Where the voice mail system 12 is associated with a telephone number, the intended recipient 34 can dial the telephone number of the voice mail system 12 using the telephony device 50. If the voice mail system 12 is ultimately reachable at an IP address via a data network, the telephone number may be translated into this IP address at some point in the network architecture 54.

The telephony device 50 may be the same as the auxiliary device 52 or it may be different, as will now become apparent from a discussion of the non-limiting examples in Figs. 3A through 3E.

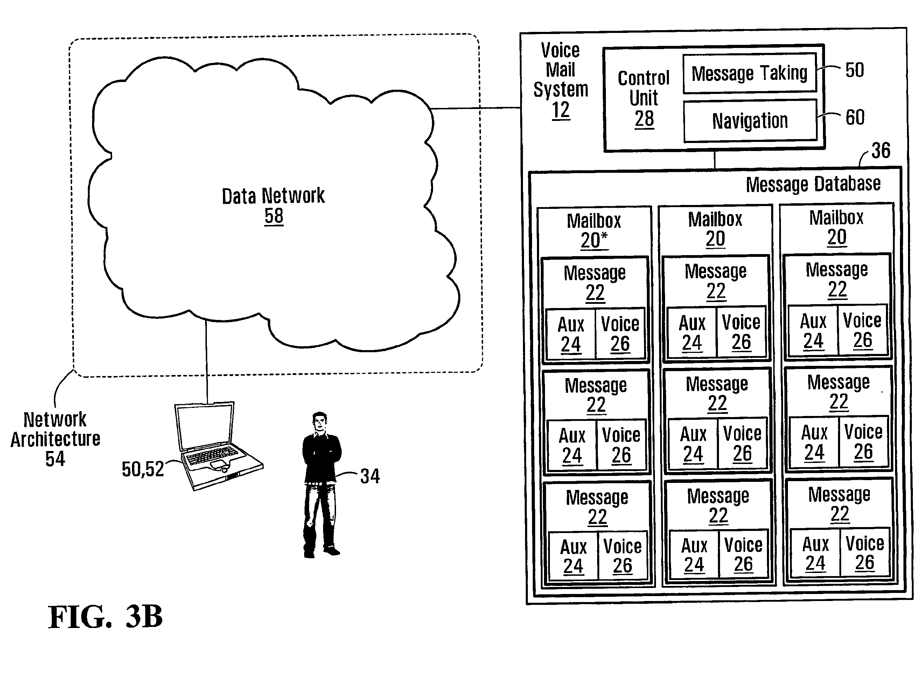

In the embodiment of Fig. 3A, the network architecture 54 comprises a telephony network 56 such as the PSTN and a data network 58 such as the Internet. In this embodiment, the telephony device 50 can be a conventional telephone connected to the telephony network 56. The auxiliary device 52 can be a computing apparatus with a connection to the data network 58. In some embodiments, the auxiliary device 52 may connect to the data network 58 via the telephony network 56. The voice mail system 12 is connected to both the telephony network 56 and to the data network 58. In the embodiment of Fig. 3B, the network architecture 54 comprises a data network 58 such as the Internet. In this embodiment, the telephony device 50 is the same as the auxiliary device 52, and can be referred to as a common device 50, 52. The common device 50, 52 can be a soft client enabled device (e.g., a telephony-enabled desktop, laptop or portable computer) connected to the data network 58. The voice mail system 12 is connected to the data network 58. In some embodiments, the voice mail system 12 may connect to the data network 58 via a telephony network (not shown).

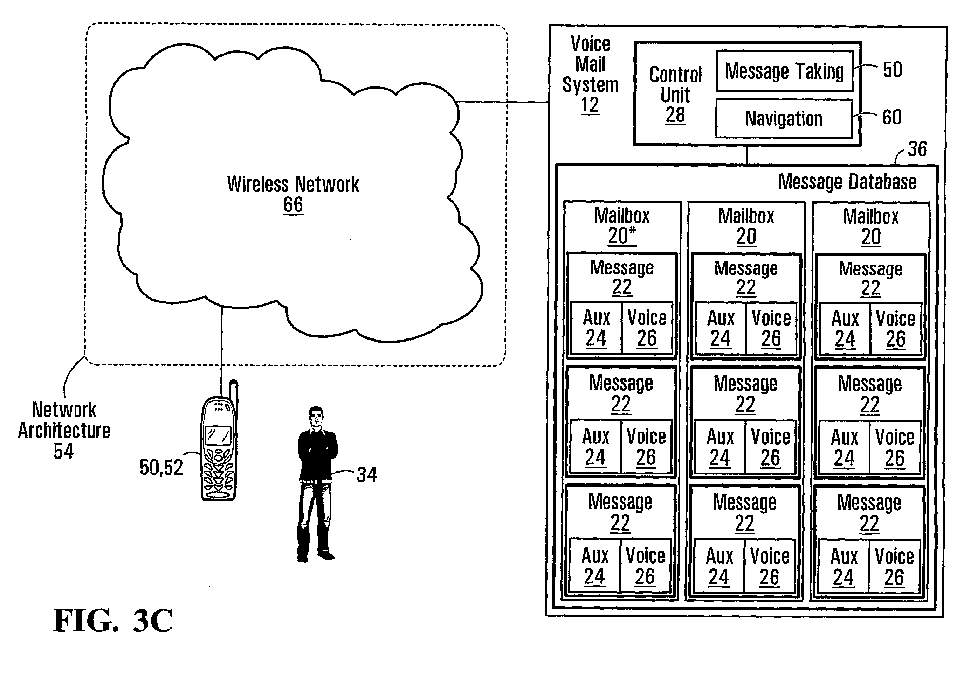

In the embodiment of Fig. 3C, the network architecture 54 comprises a wireless network 66 such as a cellular network. In this embodiment, the telephony device 50 is the same as the auxiliary device 52, and can be referred to as a common device 50, 52. The common device 50, 52 can be a wireless device such as a cellular telephone or a networked personal digital assistant (PDA). The wireless device can have a small screen and a keypad with a plurality of keys. The voice mail system 12 is connected to the wireless network 66. In some embodiments, the voice mail system 12 may connect to the wireless network 66 via a telephony network (not shown).

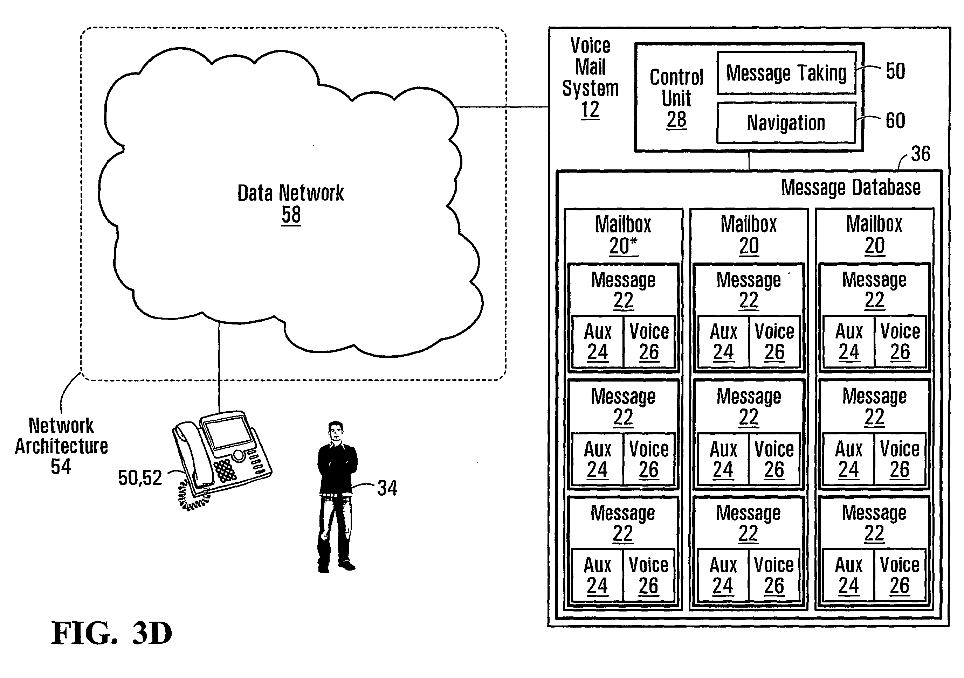

In the embodiment of Fig. 3D, the network architecture 54 comprises a data network 58 such as the Internet. In this embodiment, the telephony device 50 is the same as the auxiliary device 52, and can be referred to as a common device 50, 52. The common device 50, 52 can be an IP phone. The IP phone can have a screen and a plurality of keys, which have different functions depending on the information displayed on the screen. The IP phone may thus implement "soft key" functionality. The voice mail system 12 is connected to the data network 58. In some embodiments, the voice mail system 12 may connect to the data network 58 via a telephony network (not shown).

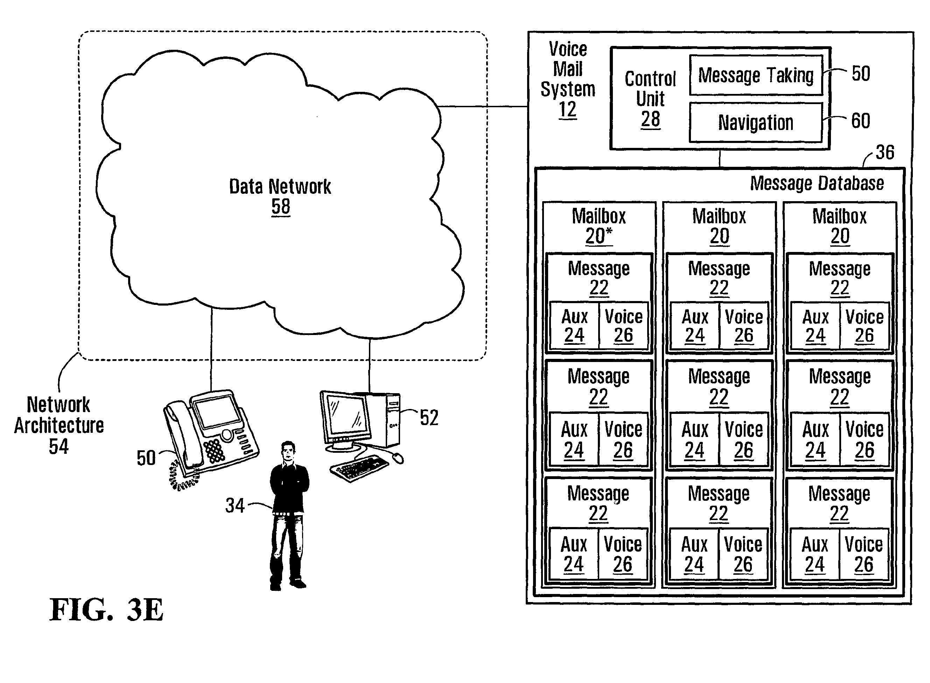

In the embodiment of Fig. 3E, the network architecture 54 comprises a data network 58 such as the Internet. In this embodiment, the telephony device 50 can be an IP phone and the auxiliary device 52 can be a computing apparatus. The voice mail system 12 is connected to the data network 58. In some embodiments, the voice mail system 12 may connect to the data network 58 via a telephony network (not shown). It should be understood that the telephony network 56 may be the same as the telephony network 42, the data network 58 may be the same as the data network 44 and the wireless network 66 may be the same as the wireless network 46.

As can be seen in Figs. 3A-3E, the control unit 28 in the voice mail system 12 runs a navigation process 60. The navigation process 60 is adapted for interacting with the intended recipient 34 to allow the intended recipient 34 to navigate through his or her messages 22 in mailbox 20*. The navigation process 60, which may be run in hardware, software, control logic or any combination thereof, is now described in greater detail.

### Navigation Process 60

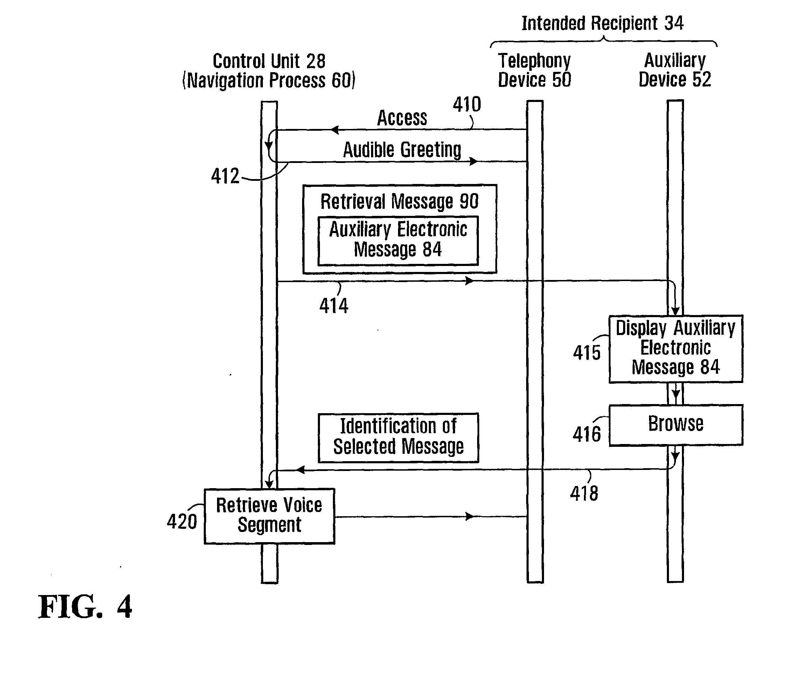

The navigation process 60 interacts with the intended recipient 34 to allow the intended recipient 34 to (a) listen to voice segments stored in the voice content field 26 of the messages 22 in mailbox 20* and (b) access auxiliary electronic messages stored in the auxiliary content field 24 of the messages 22. To this end, the following steps may be performed, with reference to Fig. 4.

### Step 410

The intended recipient 34 accesses the voice mail system 12 using the telephony device 50 (or the common device 50, 52, if applicable). Specifically, the intended recipient 34 can authenticate himself/herself in a conventional way and may subsequently access mailbox 20*.

### Steg 412

In this step, which is optional, the control unit 28 in the voice mail system 12 plays an audible greeting, which is heard by the intended recipient 34 by means of a speaker incorporated into the telephony device 50 (or the common device 50, 52, if applicable).

### Step 414

The control unit 28 delivers a retrieval message 90 to the auxiliary device 52 (or the common device 50, 52, if applicable). The retrieval message 90 includes the auxiliary electronic messages in the auxiliary content field 24 of the messages 22 in mailbox 20*. In the present example, this also includes the auxiliary electronic message 84 that was submitted by the caller 16 as described earlier.

### Step 415

The auxiliary device 52 (or the common device 50, 52, if applicable) extracts the auxiliary electronic messages from the retrieval message 90 and displays the auxiliary electronic messages for perusal by the intended recipient 34. Display of the auxiliary messages may take on various forms, depending on the embodiment. For example, display of the auxiliary electronic messages may take the form of a graphical user interface (GUI), such as an interactive window.

In the specific case where a particular auxiliary electronic message comprises text that conveys a URL, the auxiliary device 52 (or the common device 50, 52, if applicable) can be adapted for recognizing the URL and providing, in the GUI, an actionable link to the associated address on the Internet, as is done in various currently available software products such as Microsoft Word ™. Non-limiting ways of actioning the link include clicking with the aid of a mouse, pressing a sequence of keys or buttons, touching a screen with a finger, using a stylus, etc.

### Step 416

The intended recipient 34 browses the GUI using the auxiliary device 52 (or the common device 50, 52, if applicable). Depending on the nature of the auxiliary device 52 (of the common device 50, 52, if applicable), browsing may be achieved by using any one or more of a mouse, a button, a soft key, a stylus, etc. Browsing may also involve ultimately "opening" a file.

### Step 418

As a result of browsing the GUI, the intended recipient 34 can identify a particular auxiliary electronic message whose corresponding voice segment is of potential interest to the intended recipient 34. The message that includes the particular auxiliary electronic message and the corresponding voice segment may be referred to as a "selected message".

The intended recipient identifies the selected message to the control unit 28. This may be done either using the telephony device 50, or using the auxiliary device 52 or using the common device 50, 52 (if applicable).

### Step 420

The control unit 28 plays back the voice segment in the voice content field 26 of the selected message. Playback is heard by the intended recipient 34 by means of a speaker incorporated into the telephony device 50 (or the common device 50, 52, if applicable).

At this point, the intended recipient 34 may continue browsing among the auxiliary electronic messages in the GUI and, as such, the navigation process 60 may return to step 416, which may result in selection of another message and playback of the corresponding voice segment, and so on.

In the above embodiment, it is noted that the intended recipient 34 need not listen to any particular voice segment before navigating among the auxiliary electronic messages in the GUI. This may save bandwidth because unnecessary playback of voice segments is avoided.

It will thus be appreciated that the ability of a caller 16 to submit text and/or files increases the accuracy and flexibility with which certain types of information (e.g., contact information, images, URLs, etc.) can be conveyed to the intended recipient 34. At the same time, the ability of the intended recipient 34 to access text and/or files associated with individual messages allows the intended recipient 34 to better manage missed calls when eventually accessing his or her mailbox 20*.

In a variant of the embodiment of Fig. 4, the retrieval message 90 delivered at step 414 may include, in addition to the auxiliary messages in the auxiliary content field 24 of the messages 22 in mailbox 20*, also the voice segments in the voice content field 26 of the messages 22 in mailbox 20*. This will allow the messages 22 to be organized using a message management interface (e.g., similar to Microsoft Outlook ™), with voice segments and auxiliary messages being accessible entirely through the auxiliary device 52 (or the common device 50, 52, if applicable). For example, an individual message may be represented in the message management interface by a display icon which, when clicked, causes playback of the associated voice segment. Also, an individual message that has an associated auxiliary electronic message may be represented in the message management interface by a further icon which, when clicked, causes the associated auxiliary electronic message to be displayed or opened.

In another variant of the embodiment of Fig. 4, particularly applicable when the auxiliary electronic messages are large in size, the retrieval message 90 can be formulated to include a redacted version of one or more of these "large" auxiliary electronic messages. For example, in the case of an auxiliary electronic message containing an image or video segment, the retrieval message 90 may include a thumbnail of that image or video segment for display by the auxiliary device 52 (or the common device 50, 52, if applicable) using the GUI. This has the effect of increasing the usability of the information being presented to the intended recipient 34 when conducting step 416. In order to access the entire image or video segment, the intended recipient 34 may be permitted to click on or otherwise select the thumbnail. The selection can be transmitted back to the voice mail system 12 by way of a message that identifies the selected thumbnail.

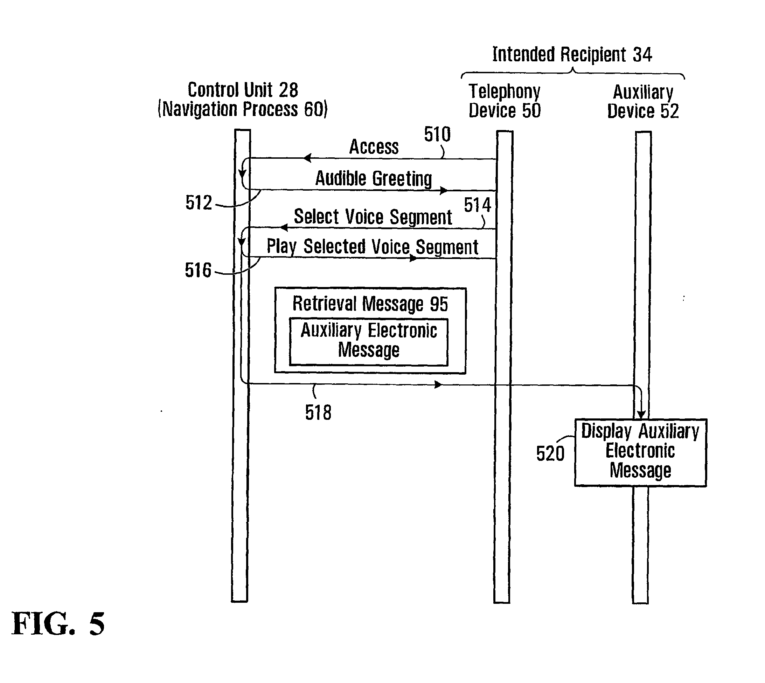

In another variant, the intended recipient 34 selects a message on the basis of its voice segment rather than on the basis of its auxiliary electronic message. This variant is now described in greater detail with reference to Fig. 5.

### Step 510

The intended recipient 34 accesses the voice mail system 12 using the telephony device 50 (or the common device 50, 52, if applicable). Specifically, the intended recipient 34 can authenticate himself/herself in a conventional way and may subsequently access mailbox 20*.

### Step 512

In this step, which is optional, the control unit 28 in the voice mail system 12 plays an audible greeting, which is heard by the intended recipient 34 by means of a speaker incorporated into the telephony device 50 (or the common device 50, 52, if applicable).

### Step 514

The intended recipient 34 selects a voice segment (e.g., the first voice segment) for playback. The selection may be effected in a conventional way using the telephony device 50 (or the common device 50, 52, if applicable).

### Step 516

The control unit 28 plays back the selected voice segment. Playback of the selected voice segment is heard by the intended recipient 34 by means of a speaker incorporated into the telephony device 50 (or the common device 50, 52, if applicable).

### Step 518

At this step, which is responsive to step 514 but may be performed before, during or after step 516, the control unit 28 delivers a retrieval message 95 to the auxiliary device 52 (or the common device 50, 52, if applicable). The retrieval message 95 includes the auxiliary electronic message found in the auxiliary content field 24 of the message 22 that contained, in its voice content field 26, the selected voice segment.

If the auxiliary electronic message is large in size, the retrieval message 95 can be formulated to include a redacted version of the auxiliary electronic message. For example, in the case of an auxiliary electronic message containing an image or video segment, the retrieval message 95 may include a thumbnail of that image or video segment.

### Step 520

The auxiliary device 52 (or the common device 50, 52, if applicable) extracts the auxiliary electronic message (or redacted version thereof) from the retrieval message 95 and displays the auxiliary electronic message for the intended recipient 34. Display of the auxiliary message may take on various forms, depending on the embodiment. For example, display of the auxiliary electronic message may take the form of a graphical user interface (GUI), such as an interactive window.

In the specific case where a particular auxiliary electronic message comprises text that conveys a URL, the auxiliary device 52 (or the common device 50, 52, if applicable) can be adapted for recognizing the URL and providing, in the GUI, a clickable hyperlink to the associated address on the Internet, as is done in various currently available software packages such as Microsoft Word ™.

In other cases, e.g., where a particular auxiliary electronic message comprises a file, the auxiliary device 52 (or the common device 50, 52, if applicable) can be adapted for allowing the file to be opened immediately or represented by a clickable icon in the GUI.

In the specific case where the retrieval message 95 comprises a thumbnail of a particular image or video segment, the auxiliary device 52 (or the common device 50, 52, if applicable) can be adapted for displaying the thumbnail in the GUI. In order to access the entire image or video segment, the intended recipient 34 may be permitted to click on or otherwise identify the thumbnail via the GUI.

At this point, the navigation process 60 may return to step 514, where the intended recipient 34 selects another voice segment for playback, which results in delivery of the associated auxiliary electronic message, and so on.

It will thus be appreciated that the ability of a caller 16. to submit text and/or files increases the accuracy and flexibility with which certain types of information (e.g., contact information, images, URLs, etc.) can be conveyed to the intended recipient 34. At the same time, the ability of the intended recipient 34 to access text and/or files associated with individual messages allows the intended recipient 34 to better manage missed calls when eventually accessing his or her mailbox 20*.

Those skilled in the art will appreciate that in the above embodiments, in order to know where to send the retrieval message (90 or 95), the control unit 28 needs to know an auxiliary address of the intended recipient 34, i.e., the address at which the intended recipient 34 can be reached when using the auxiliary device 52 (or the common device 50, 52, if applicable). Various ways of obtaining an auxiliary address have been described earlier on with reference to the various scenarios in Figs. 1A-1E in the case of the caller 16. As such, and recognizing the architectural similarities between the examples of Figs. 1A-1E and the examples of Figs. 3A-3E, one skilled in the art should be capable of obtaining the auxiliary address of the intended recipient 34 by applying similar techniques as were used in Figs. 1A-1E for the purposes of obtaining the auxiliary address of the caller 16. One additional non-limiting way of obtaining the auxiliary address of the intended recipient 34 is by consulting a database that associates each mailbox 20 (including mailbox 20*) with an associated intended recipient (including the intended recipient 34).

Those skilled in the art will appreciate that in some embodiments, the functionality of the control unit 28 (including the message taking process 50 and the navigation process 60) may be implemented as pre-programmed hardware or firmware elements (e.g., application specific integrated circuits (ASICs), electrically erasable programmable read-only memories (EEPROMs), etc.), or other related components. In other embodiments, the control unit 28 may be implemented as an arithmetic and logic unit (ALU) having access to a code memory (not shown) which stores program instructions for the operation of the ALU. The program instructions could be stored on a medium which is fixed, tangible and readable directly by the control unit 28, (e.g., removable diskette, CD-ROM, ROM, fixed disk, USB drive, etc.), or the program instructions could be stored remotely but transmittable to the control unit 28 via a modem or other interface device (e.g., a communications adapter) connected to a network over a transmission medium. The transmission medium may be either a tangible medium (e.g., optical or analog communications lines) or a medium implemented using wireless techniques (e.g., microwave, infrared or other transmission schemes).

While specific embodiments of the present invention have been described and illustrated, it will be apparent to those skilled in the art that numerous modifications and variations can be made without departing from the scope of the invention as defined in the appended claims.

## Claims

1. A method suitable for execution by a voice mail system for handling a call placed by a caller, the caller being associated with an auxiliary address at which the caller can be reached electronically, said method comprising:
- providing the caller with an opportunity to submit a voice segment destined for an intended recipient;
- receiving from the caller the voice segment;
- transmitting an invitation message to the auxiliary address associated with the caller, said invitation message for providing the caller with an opportunity to submit an auxiliary electronic message associated with the voice segment, the auxiliary electronic message also destined for the intended recipient;
- receiving from the caller the auxiliary electronic message;
- storing in a mailbox associated with the intended recipient a composite message comprising the voice segment and the auxiliary electronic message;
- releasing the auxiliary electronic message to the intended recipient upon interaction with the intended recipient.

2. The method defined in claim **1**, wherein said transmitting an invitation message to the auxiliary address associated with the caller is executed after receiving the voice segment from the caller.

3. The method defined in claim **1**, wherein said providing the caller with an opportunity to submit a voice segment destined for an intended recipient is executed after receiving the auxiliary electronic message from the caller.

4. The method defined in claim **1**, wherein the invitation message is an instant message.

5. The method defined in claim **1**, wherein the invitation message is an email message.

6. The method defined in claim **1**, wherein the invitation message is a real-time text message.

7. The method defined in claim **1**, further comprising receiving the auxiliary address associated with the caller.

8. The method defined in claim **7**, wherein said receiving the auxiliary address associated with the caller comprises consulting a database that associates the auxiliary address of the caller with a directory number of a device used by the caller to place the call.

9. The method defined in claim **8**, further comprising obtaining the directory number of the device used by the caller to place the call.

10. The method defined in claim **9**, wherein the directory number of the device used by the caller to place the call is obtained from calling line identification (CLID) information associated with the call.

11. The method defined in claim **10**, wherein the auxiliary address associated with the caller comprises an IP address of a networked computing apparatus.

12. The method defined in claim **7,** wherein the auxiliary address associated with the caller comprises an address of a device used by the caller to place the call.

13. The method defined in claim **12**, further comprising observing packets sent by the device used by the caller to place the call, thereby to learn the address of the device used by the caller to place the call.

14. The method defined in claim **13**, wherein said address is a MAC address of a computing apparatus implementing a soft client.

15. The method defined in claim **13**, wherein said address is an IP address of an IP phone.

16. The method defined in claim **13**, wherein said address is a electronic serial number of a wireless device.

17. The method defined in claim **16**, wherein said wireless device is at least one of a cellular phone and a networked personal digital assistant.

18. The method defined in claim **7**, wherein said receiving the auxiliary address associated with the caller comprises consulting a database that associates the auxiliary address of the caller with an address of an IP phone used by the caller to place the call.

19. The method defined in claim **18**, further comprising observing packets sent by the IP phone used by the caller to place the call, thereby to learn the address of the IP phone used by the caller to place the call.

20. The method defined in claim **19**, wherein the auxiliary address associated with the caller comprises an IP address of a networked computing apparatus

21. The method defined in claim **1**, wherein the invitation message triggers a device used by the caller to display a pop-up window inside which the caller is allowed to submit the auxiliary electronic message.

22. The method defined in claim **1,** wherein the invitation message triggers a device used by the caller to display a browser window via which the caller is capable of submitting the auxiliary electronic message.

23. The method defined in claim **1**, wherein the invitation messages triggers a device used by the caller to place the call to implement a graphical user interface allowing the caller to submit the auxiliary electronic message.

24. The method defined in claim **1**, further comprising receiving a reply message responsive to the invitation message, the reply message containing the auxiliary electronic message.

25. The method defined in claim **24**, wherein the auxiliary electronic message comprises text.

26. The method defined in claim **25**, wherein said text conveys at least one of a context indicator, a uniform resource locator, and an alphanumeric code.

27. The method defined in claim **24**, wherein the auxiliary electronic message comprises a file.

28. The method defined in claim **25**, wherein the auxiliary electronic message comprises a file.

29. The method defined in claim **27**, wherein said file conveys at least one of an electronic business card, an audio segment, a video segment, text, graphics, multimedia and digital signature.

30. The method defined in claim **1**, wherein the composite message comprises a first field containing the voice segment and a second field containing the auxiliary electronic message.

31. A method suitable for execution by a voice mail system for handling a call placed by a caller to an intended recipient, the intended recipient being associated with an auxiliary address at which the intended recipient can be reached electronically, said method comprising:
- providing the caller with an opportunity to submit a voice segment destined for the intended recipient;
- receiving from the caller the voice segment;
- providing the caller with an opportunity to submit an auxiliary electronic message associated with the voice segment, the auxiliary electronic message also destined for the intended recipient;
- receiving from the caller the auxiliary electronic message;
- storing in a mailbox associated with the intended recipient a composite message comprising the voice segment and the auxiliary electronic message;
sending a retrieval message to the auxiliary address associated with the intended recipient, the retrieval message including the auxiliary electronic message.

32. The method defined in claim **31**, wherein said sending a retrieval message to the auxiliary address associated with the intended recipient enables the intended recipient to determine a desire to retrieve the voice segment.

33. The method defined in claim **31**, wherein said sending a retrieval message is executed in response to successful authentication of the intended recipient.

34. The method defined in claim **31**, wherein the retrieval message is an instant message.

35. The method defined in claim **31**, wherein the retrieval message is an email message.

36. The method defined in claim **31,** wherein the retrieval message is a real-time text message.

37. The method defined in claim **31**, further comprising receiving the auxiliary address associated with the intended recipient.

38. The method defined in claim **37**, wherein said receiving the auxiliary address associated with the intended recipient comprises consulting a database that associates the auxiliary address of the intended recipient with a directory number of a device used by the intended recipient to interact with the voice mail system.

39. The method defined in claim **38**, further comprising receiving the directory number of the device used by the intended recipient to interact with the voice mail system.

40. The method defined in claim **39**, wherein the directory number of the device used by the intended recipient to interact with the voice mail system is obtained from calling line identification (CLID) information generated as a result of interaction of the intended recipient with the voice mail system.

41. The method defined in claim **40**, wherein the auxiliary address associated with the intended recipient comprises an IP address of a networked computing apparatus.

42. The method defined in claim **37**, wherein the auxiliary address associated with the intended recipient comprises an address of a device used by the intended recipient to interact with the voice mail system.

43. The method defined in claim **42**, further comprising observing packets sent by the device used by the intended recipient to interact with the voice mail system, thereby to learn the address of the device used by the intended recipient to interact with the voice mail system.

44. The method defined in claim **43,** wherein said address is a MAC address of a computing apparatus implementing a soft client.

45. The method defined in claim **43,** wherein said address is an IP address of an IP phone.

46. The method defined in claim **43,** wherein said address is an electronic serial number of a wireless device.

47. The method defined in claim **46,** wherein said wireless device is at least one of a cellular phone and a networked personal digital assistant.

48. The method defined in claim **37,** wherein said receiving the auxiliary address associated with the intended recipient comprises consulting a database that associates the auxiliary address associated with the intended recipient with an address of an IP phone used by the intended recipient to interact with the voice mail system.

49. The method defined in claim **48,** further comprising observing packets sent by the IP phone used by the intended recipient to interact with the voice mail system thereby to learn the address of the IP phone used by the intended recipient to interact with the voice mail system.

50. The method defined in claim **49,** wherein the auxiliary address associated with the intended recipient comprises an IP address of a networked computing apparatus.

51. The method defined in claim **37,** wherein said receiving the auxiliary address associated with the intended recipient comprises consulting a database that associates the mailbox associated with the intended recipient with the auxiliary address of the intended recipient.

52. The method defined in claim **31,** wherein processing of the retrieval message at a device used by the intended recipient to interact with the voice mail system triggers the auxiliary electronic message to be extracted by said device.

53. The method defined in claim **52,** wherein when the auxiliary electronic message comprises text, extraction of the auxiliary electronic message causes display of said text on said device.

54. The method defined in claim **31,** wherein the retrieval message comprises a plurality of messages including the auxiliary electronic message, wherein processing of the retrieval message at a device used by the intended recipient to interact with the voice mail system triggers the plurality of messages to be extracted by said device and conveyed to the intended recipient via a graphical user interface.

55. The method defined in claim **54,** further comprising receiving from the intended recipient a selection of a particular one of the plurality of messages and sending to the intended recipient a voice segment associated with the selected message.

56. The method defined in claim **31,** wherein said sending a retrieval message is executed in response to receipt of a selection from the intended recipient identifying the composite message.

57. The method defined in claim **56,** wherein the selection is received from a telephony device associated with the intended recipient

58. The method defined in claim **56,** wherein the selection is received from an auxiliary device associated with the intended recipient.

59. The method defined in claim **31,** further comprising sending to the auxiliary address associated with the intended recipient a redacted version of the auxiliary electronic message, wherein said sending a retrieval message is executed only in response to a message indicative of a selection of the redacted version of the auxiliary electronic message by the intended recipient.

60. The method defined in claim **59,** wherein the auxiliary electronic message comprises a file conveying an image segment and wherein the redacted version of the auxiliary electronic message comprises a file conveying a thumbnail of the image segment.

61. The method defined in claim **59,** wherein the auxiliary electronic message comprises a file conveying a video segment and wherein the redacted version of the auxiliary electronic message comprises a file conveying a thumbnail of the video segment

62. The method defined in claim **31,** the auxiliary electronic message being a particular auxiliary electronic message, wherein the retrieval message comprises a plurality of auxiliary electronic messages including the particular auxiliary electronic message.

63. The method defined in claim **62,** wherein the retrieval message triggers a device used by the intended recipient to interact with the voice mail system to implement a message management interface to visually organize the plurality of auxiliary electronic messages.

64. The method defined in claim **31,** the auxiliary electronic message being a particular auxiliary electronic message, the voice segment being a particular voice segment, wherein said retrieval message comprises a plurality of auxiliary electronic messages including the particular auxiliary electronic message and a plurality of voice segments including the particular voice segment.

65. The method defined in claim **64,** wherein the retrieval message triggers a device used by the intended recipient to interact with the voice mail system to implement a message management interface to visually organize the plurality of auxiliary electronic messages and the plurality of voice segments.

66. The method defined in claim **31,** wherein the auxiliary electronic message conveys a uniform resource locator, wherein the retrieval message triggers a device used by the intended recipient to interact with the voice mail system to implement a message management interface to allow the uniform resource locator to be actionable by the intended recipient.

67. Computer-readable media tangibly embodying a program of instructions executable by a computing device to perform a method of handling a call placed by a caller, the caller being associated with an auxiliary address at which the caller can be reached electronically, the method comprising:
- providing the caller with an opportunity to submit a voice segment destined for an intended recipient;
- receiving from the caller the voice segment:
- transmitting an invitation message to the auxiliary address associated with the caller, said invitation message for providing the caller with an opportunity to submit an auxiliary electronic message associated with the voice segment, the auxiliary electronic message also destined for the intended recipient;
- receiving from the caller the auxiliary electronic message,;
- storing in a mailbox associated with the intended recipient a composite message comprising the voice segment and the auxiliary electronic message;
- releasing the auxiliary electronic message to the intended recipient upon interaction with the intended recipient.

68. Computer-readable media tangibly embodying a program of instructions executable by a computing device to perform a method of handling a call placed by a caller to an intended recipient, the intended recipient being associated with an auxiliary address at which the intended recipient can be reached electronically, the method comprising:
- providing the caller with an opportunity to submit a voice segment destined for the intended recipient;
- receiving from the caller the voice segment;
- providing the caller with an opportunity to submit an auxiliary electronic message associated with the voice segment, the auxiliary electronic message also destined for the intended recipient;
- receiving from the caller the auxiliary electronic message;
- storing in a mailbox associated with the intended recipient a composite message comprising the voice segment and the auxiliary electronic message;
- sending a retrieval message to the auxiliary address associated with the intended recipient, the retrieval message including the auxiliary electronic message.

69. A method suitable for execution by a voice mail system for handling a call placed by a caller, comprising:
- providing the caller with an opportunity to submit a voice segment destined for an intended recipient;
- receiving from the caller the voice segment;
- providing the caller with an opportunity to submit an auxiliary electronic message associated with the voice segment, the auxiliary electronic message also destined for the intended recipient;
- receiving from the caller the auxiliary electronic message;
- storing in a mailbox associated with the intended recipient a composite message comprising the voice segment and the auxiliary electronic message;
- releasing one of the voice segment and the auxiliary electronic message to the intended recipient upon interaction with the intended recipient;
- releasing the other one of the voice segment and the auxiliary electronic message to the intended recipient only if requested by the intended recipient

## Patentansprüche

1. Verfahren zur Ausführung durch ein Voicemailsystem zur Behandlung eines von einem Anrufer durchgeführten Anrufs, wobei der Anrufer einer Hilfsadresse zugeordnet ist, an der der Anrufer elektronisch erreichbar ist, umfassend:
- dem Anrufer eine Gelegenheit geben, ein für einen beabsichtigten Empfänger bestimmtes Sprachsegment aufzugeben;
- Empfangen des Sprachsegmentes von dem Anrufer;
- Übermitteln einer Einladungsnachricht an die dem Anrufer zugeordnete Hilfsadresse, wobei die Einladungsnachricht den Zweck erfüllt, dem Anrufer eine Gelegenheit zu geben, eine dem Sprachsegment zugeordnete elektronische Hilfsnachricht aufzugeben, welche ebenfalls für den beabsichtigten Empfänger bestimmt ist;
- Empfangen der elektronischen Hilfsnachricht von dem Anrufer;
- Speichern einer das Sprachsegment und die elektronische Hilfsnachricht umfassenden, zusammengesetzten Nachricht in einem dem beabsichtigten Empfänger zugeordneten Briefkasten;
- freigeben der elektronischen Hilfsnachricht an den beabsichtigten Empfänger nach Interaktion mit dem beabsichtigten Empfänger.

2. Verfahren nach Anspruch 1, wobei das Übermitteln einer Einladungsnachricht an die dem Anrufer zugeordnete Hilfsadresse nach Empfang des Sprachsegments des Anrufers durchgeführt wird.

3. Verfahren nach Anspruch 1, wobei das dem Anrufer eine Gelegenheit Geben, ein für einen beabsichtigten Empfänger bestimmtes Sprachsegment abzulegen, nach Empfang der elektronischen Hilfsnachricht von dem Anrufer erfolgt.

4. Verfahren nach Anspruch 1, wobei die Einladungsnachricht eine Sofortnachricht ist.

5. Verfahren nach Anspruch 1, wobei die Einladungsnachricht eine Emailnachricht ist.

6. Verfahren nach Anspruch 1, wobei die Einladungsnachricht eine Echtzeittextnachricht ist.

7. Verfahren nach Anspruch 1, umfassend das Empfangen der dem Anrufer zugeordneten Hilfsadresse.

8. Verfahren nach Anspruch 7, wobei das Empfangen der dem Anrufer zugeordneten Hilfsadresse die Abfrage einer Datenbank umfasst, die die Hilfsadresse des Anrufers einer Verzeichnisnummer eines vom Anrufer zum Anrufen benutzten Gerätes zuordnet.

9. Verfahren nach Anspruch 8, umfassend das Erlangen der Verzeichnisnummer des vom Anrufer zum Anrufen benutzten Gerätes.

10. Verfahren nach Anspruch 9, wobei die Verzeichnisnummer des vom Anrufer zur Durchführung des Anrufes verwendeten Gerätes aus Rufleitungsidentifikations- (CLID) Information erlangt wird, die dem Anruf zugeordnet ist.

11. Verfahren nach Anspruch 10, wobei die dem Anrufer zugeordnete Hilfsadresse eine IP-Adresse eines vernetzten Rechengerätes umfasst.

12. Verfahren nach Anspruch 7, wobei die dem Anrufer zugeordnete Hilfsadresse eine Adresse eines Gerätes umfasst, das vom Anrufer zur Durchführung des Anrufs verwendet wird.

13. Verfahren nach Anspruch 12, umfassend ein Beobachten von Paketen, die von dem Gerät gesendet werden, welches vom Anrufer zur Durchführung des Anrufs verwendet wird, um dadurch die Adresse des vom Anrufer zur Durchführung des Anrufs verwendeten Gerätes zu erfahren.

14. Verfahren nach Anspruch 13, wobei die Adresse eine MAC-Adresse eines Rechengerätes ist, welches einen Softclient einrichtet.

15. Verfahren nach Anspruch 13, wobei die Adresse eine IP-Adresse eines IP-Telephons ist.

16. Verfahren nach Anspruch 13, wobei die Adresse eine elektronische Seriennummer eines drahtlosen Gerätes ist.

17. Verfahren nach Anspruch 16, wobei das drahtlose Gerät mindestens eines aus einem Zellulartelephon und einem vernetzten Handrechner gewähltes ist.

18. Verfahren nach Anspruch 7, wobei das Empfangen der dem Anrufer zugeordneten Hilfsadresse das Abfragen einer Datenbank umfasst, die die Hilfsadresse des Anrufers einer Adresse eines vom Anrufer zur Durchführen des Anrufs verwendeten IP-Telephons zuordnet.

19. Verfahren nach Anspruch 18, umfassend ein Beobachten von Paketen, die von einem IP-Telephon gesendet werden, welches vom Anrufer zur Durchführung des Anrufes verwendet wird, um dadurch die Adresse des vom Anrufer zur Durchführung des Anrufes verwendeten IP-Telephons zu erfahren.

20. Verfahren nach Anspruch 19, wobei die dem Anrufer zugeordnete Hilfsadresse eine IP-Adresse eines vernetzten Rechengerätes umfasst.

21. Verfahren nach Anspruch 1, wobei die Einladungsnachricht ein von dem Anrufer benutztes Gerät dazu veranlasst, ein Dialogfenster anzuzeigen, in dem dem Anrufer ermöglicht wird, die elektronische Hilfsnachricht aufzugeben.

22. Verfahren nach Anspruch 1, wobei die Einladungsnachricht ein von dem Anrufer benutztes Gerät dazu veranlasst, ein Browserfenster anzuzeigen, über das der Anrufer die elektronische Hilfsnachricht aufgeben kann.

23. Verfahren nach Anspruch 1, wobei die Einladungsnachricht ein von dem Anrufer zur Durchführung des Anrufs verwendetes Gerät dazu veranlasst, eine graphische Benutzeroberfläche einzurichten, die dem Anrufer ermöglicht, die elektronische Hilfsnachricht aufzugeben.

24. Verfahren nach Anspruch 1, umfassend das Empfangen einer Antwortnachricht als Erwiderung auf die Einladungsnachricht, wobei die Antwortnachricht die elektronische Hilfsnachricht enthält.

25. Verfahren nach Anspruch 24, wobei die elektronische Hilfsnachricht Text umfasst.

26. Verfahren nach Anspruch 25, wobei der Text mindestens eines der nachstehenden übermittelt, ein Kontextindikator, eine einheitlichen Resourcenadresse und ein alphanumerischer Code.

27. Verfahren nach Anspruch 24, wobei die elektronische Hilfsnachricht eine Datei umfasst.

28. Verfahren nach Anspruch 25, wobei die elektronische Hilfsnachricht eine Datei umfasst.

29. Verfahren nach Anspruch 27, wobei die Datei mindestens eines der nachstehenden übermittelt, eine elektronische Visitenkarte, ein Audiosegment, ein Videosegment, Text, Grafiken, Multimedia und eine digitale Signatur.

30. Verfahren nach Anspruch 1, wobei die zusammengesetzte Nachricht ein erstes, das Sprachsegment enthaltendes Feld, und ein zweites, die elektronische Hilfsnachricht enthaltendes Feld umfasst.

31. Verfahren zur Ausführung durch ein Voicemailsystem zur Behandlung eines von einem Anrufer an einen beabsichtigten Empfänger gerichteten Anrufes, wobei der beabsichtigte Empfänger einer Hilfsadresse zugeordnet ist, an der der beabsichtigte Empfänger elektronisch erreichbar ist, umfassend:
- dem Anrufer eine Gelegenheit geben, ein für den beabsichtigten Empfänger bestimmtes Sprachsegment aufzugeben;
- Empfangen des Sprachsegmentes von dem Anrufer;
- dem Anrufer eine Gelegenheit geben, eine dem Sprachsegment zugeordnete elektronische Hilfsnachricht aufzugeben, welche ebenfalls für den beabsichtigten Empfänger bestimmt ist;
- Empfangen der elektronischen Hilfsnachricht von dem Anrufer;
- Speichern einer das Sprachsegment und die elektronische Hilfsnachricht umfassenden, zusammengesetzten Nachricht in einem dem beabsichtigten Empfänger zugeordneten Briefkasten;
- Senden einer Abrufnachricht an die dem beabsichtigten Empfänger zugeordnete Hilfsadresse, wobei die Abrufnachricht die elektronische Hilfsnachricht enthält.

32. Verfahren nach Anspruch 31, wobei das Senden der Abrufnachricht an die dem beabsichtigten Empfänger zugeordnete Hilfsadresse den beabsichtigten Empfänger in die Lage versetzt, einen Wunsch nach Abruf des Sprachsegments zu bestimmen.

33. Verfahren nach Anspruch 31, wobei das Senden der Abrufnachricht in Antwort auf erfolgreiche Authentifizierung des beabsichtigten Empfängers erfolgt.

34. Verfahren nach Anspruch 31, wobei die Abrufnachricht eine Sofortnachricht ist.

35. Verfahren nach Anspruch 31, wobei die Abrufnachricht eine Emailnachricht ist.

36. Verfahren nach Anspruch 31, wobei die Abrufnachricht eine Echtzeittextnachricht ist.

37. Verfahren nach Anspruch 31, umfassend das Empfangen der dem beabsichtigten Empfänger zugeordneten Hilfsadresse.

38. Verfahren nach Anspruch 37, wobei das Empfangen der dem beabsichtigten Empfänger zugeordneten Hilfsadresse die Abfrage einer Datenbank umfasst, die die Hilfsadresse des beabsichtigten Empfängers einer Verzeichnisnummer eines Gerätes zuordnet, dass vom beabsichtigten Empfänger zur Interaktion mit dem Voicemailsystem benutzt wird.

39. Verfahren nach Anspruch 38, umfassend Empfangen der Verzeichnisnummer des Gerätes, das vom beabsichtigten Empfänger zur Interaktion mit dem Voicemailsystem verwendet wird.

40. Verfahren nach Anspruch 39, wobei die Verzeichnisnummer des Gerätes, das vom beabsichtigten Empfänger zur Interaktion mit dem Voicemailsystem verwendet wird, aus Rufleitungsidentifikations- (CLID) Information gewonnen wird, welche als Ergebnis der Interaktion des beabsichtigten Empfängers mit dem Voicemailsystem erzeugt wird.

41. Verfahren nach Anspruch 40, wobei die dem beabsichtigten Empfänger zugeordnete Hilfsadresse eine IP-Adresse eines vernetzten Rechengerätes umfasst.

42. Verfahren nach Anspruch 37, wobei die dem beabsichtigten Empfänger zugeordnete Hilfsadresse eine Adresse eines Gerätes umfasst, welches vom beabsichtigten Empfänger zur Interaktion mit dem Voicemailsystem benutzt wird.

43. Verfahren nach Anspruch 42, umfassend ein Beobachten von Paketen, die von dem Gerät gesendet sind, welches vom beabsichtigten Empfänger zur Interaktion mit dem Voicemailsystem verwendet wird, um dadurch die Adresse des Gerätes zu erfahren, welches vom beabsichtigten Empfänger zur Interaktion mit dem Voicemailsystem verwendet wird.

44. Verfahren nach Anspruch 43, wobei die Adresse eine MAC-Adresse eines Rechengerätes ist, das einen Softclient einrichtet.

45. Verfahren nach Anspruch 43, wobei die Adresse eine IP-Adresse eines IP-Telephons ist.

46. Verfahren nach Anspruch 43, wobei die Adresse eine elektronische Seriennummer eines drahtlosen Gerätes ist.

47. Verfahren nach Anspruch 46, wobei das drahtlose Gerät mindestens eines aus einem Zellulartelephon und einem vernetzten Handrechner gewähltes ist.

48. Verfahren nach Anspruch 37, wobei das Empfangen der dem beabsichtigten Empfänger zugeordneten Hilfsadresse das Abfragen einer Datenbank umfasst, welche der dem beabsichtigten Empfänger zugeordneten Hilfsadresse eine Adresse eines IP-Telephons zuordnet, das vom beabsichtigten Empfänger zur Interaktion mit dem Voicemailsystem verwendet wird.

49. Verfahren nach Anspruch 48, umfassend ein Beobachten von Paketen, die von dem IP-Telephon gesendet sind, das vom beabsichtigten Empfänger zur Interaktion mit dem Voicemailsystem benutzt wird, um dadurch die Adresse des IP-Telephons zu erfahren, welches vom beabsichtigten Empfänger zur Interaktion mit dem Voicemailsystem benutzt wird.

50. Verfahren nach Anspruch 49, wobei die dem beabsichtigtem Empfänger zugeordnete Hilfsadresse eine IP-Adresse eines vernetzten Rechengerätes umfasst.

51. Verfahren nach Anspruch 37, wobei das Empfangen der dem beabsichtigten Empfänger zugeordneten Hilfsadresse das Abfragen einer Datenbank umfasst, welche den dem beabsichtigten Empfänger zugeordneten Briefkasten der Hilfsadresse des beabsichtigten Empfängers zuordnet.

52. Verfahren nach Anspruch 31, wobei eine Verarbeitung der Abrufnachricht an dem Gerät, welches vom beabsichtigten Empfänger zur Interaktion mit dem Voicemailsystem verwendet wird, das Entnehmen der elektronischen Hilfsnachricht durch das Gerät auslöst.

53. Verfahren nach Anspruch 52, wobei, wenn die elektronische Hilfsnachricht Text enthält, eine Entnahme der elektronischen Hilfsnachricht die Anzeige des Textes auf dem Gerät hervorruft.

54. Verfahren nach Anspruch 31, wobei die Abrufnachricht mehrere Nachrichten umfasst, die die elektronischen Hilfsnachricht einschließen, wobei ein Verarbeiten der Abrufnachricht an dem Gerät, welches vom beabsichtigten Empfänger zur Interaktion mit dem Voicemailsystem verwendet wird, ein Entnehmen der mehreren Nachrichten durch das Gerät und deren Übermittlung an den beabsichtigten Empfänger über eine graphische Benutzerschnittstelle auslöst.

55. Verfahren nach Anspruch 54, umfassend ein Empfangen einer bestimmten, aus den mehreren Nachrichten gewählten Nachricht und ein Senden eines Sprachsegments an den beabsichtigten Empfänger mit der gewählten Nachricht.

56. Verfahren nach Anspruch 31, wobei das Senden einer Abrufnachricht als Antwort auf Empfang einer Auswahl von dem beabsichtigten Empfänger ausgeführt wird, die die zusammengesetzte Nachricht identifiziert.

57. Verfahren nach Anspruch 56, wobei die Auswahl von einem dem beabsichtigten Empfänger zugeordneten Telephongerät empfangen wird.

58. Verfahren nach Anspruch 56, wobei die Auswahl von einem dem beabsichtigten Empfänger zugeordneten Hilfsgerät empfangen wird.

59. Verfahren nach Anspruch 31, umfassend Senden einer redigierten Version der elektronischen Hilfsnachricht zu der dem beabsichtigten Empfänger zugeordneten Hilfsadresse, wobei das Senden der Abrufnachricht nur als Antwort auf eine Nachricht ausgeführt wird, welche eine Auswahl der redigierten Version der elektronischen Hilfsnachrichten durch den beabsichtigten Empfänger anzeigt.

60. Verfahren nach Anspruch 59, wobei die elektronische Hilfsnachricht eine Datei umfasst, die ein Bildsegment übermittelt, und wobei die redigierte Version der elektronischen Hilfsnachricht eine Datei umfasst, die eine Miniaturansicht des Bildsegmentes enthält.

61. Verfahren nach Anspruch 59, wobei die elektronische Hilfsdatei eine Datei umfasst, die ein Videosegment übermittelt, und wobei die redigierte Version der elektronischen Hilfsdatei eine Datei umfasst, die eine Miniaturansicht des Videosegments übermittelt.

62. Verfahren nach Anspruch 31, wobei die elektronische Hilfsnachricht eine bestimmte elektronische Hilfsnachricht ist und wobei die Abrufnachricht mehrere elektronische Hilfsnachrichten einschließlich der bestimmten elektronischen Hilfsnachricht umfasst.

63. Verfahren nach Anspruch 62, wobei die Abrufnachricht auslöst, dass ein Gerät, das vom beabsichtigten Empfänger zur Interaktion mit dem Voicemailsystem benutzt wird, eine Nachrichtenmanagementbedienoberfläche einrichtet, um die mehreren elektronischen Hilfsnachrichten visuell zu organisieren.

64. Verfahren nach Anspruch 31, wobei die elektronische Hilfsnachricht eine bestimmte elektronische Hilfsnachricht und das Sprachsegment ein bestimmtes Sprachsegment ist und wobei die Abrufnachricht mehrere elektronische Hilfsnachrichten, die die bestimmte elektronische Hilfsnachricht einschließen, und mehrere Sprachsegmente, die das bestimmte Sprachsegment einschließen, umfasst.

65. Verfahren nach Anspruch 64, wobei die Abrufnachricht auslöst, dass ein Gerät, das vom beabsichtigten Empfänger zur Interaktion mit dem Voicemailsystem benutzt wird, eine Nachrichtenmanagementbedienoberfläche einrichtet, um die mehreren elektronischen Hilfsnachrichten und die mehreren Sprachsegmente visuell zu organisieren.

66. Verfahren nach Anspruch 31, wobei die elektronische Hilfsnachricht eine einheitliche Ressourcenadresse übermittelt, wobei die Abrufnachricht auslöst, dass ein Gerät, das vom beabsichtigten Empfänger zur Interaktion mit dem Voicemailsystem benutzt wird, eine Nachrichtenmanagementbedienoberfläche einrichtet, um es der einheitlichen Ressourcenadresse zu ermöglichen, durch den beabsichtigten Empfänger betätigbar zu sein.

67. Computerlesbares Medium, das fassbar ein Programm von Befehlen verkörpert, die durch ein Rechengerät ausführbar sind, um ein Verfahren zum Handhaben eines von einem Anrufer durchgeführten Anrufes auszuführen, wobei dem Anrufer eine Hilfsadresse zugeordnet ist, an der der Anrufer elektronisch erreicht werden kann, wobei das Verfahren umfasst:
- dem Anrufer eine Gelegenheit geben, ein für einen beabsichtigten Empfänger bestimmtes Sprachsegment aufzugeben;
- Empfangen des Sprachsegmentes von dem Anrufer;
- Übermitteln einer Einladungsnachricht an die dem Anrufer zugeordnete Hilfsadresse, wobei die Einladungsnachricht den Zweck erfüllt, dem Anrufer eine Gelegenheit zu geben, eine dem Sprachsegment zugeordnete elektronische Hilfsnachricht aufzugeben, welche ebenfalls für den beabsichtigten Empfänger bestimmt ist;
- Empfangen der elektronischen Hilfsnachricht von dem Anrufer;
- Speichern einer aus dem Sprachsegment und der elektronischen Hilfsnachricht zusammengesetzten Nachricht in einem dem beabsichtigten Empfänger zugeordneten Briefkasten;
- freigeben der elektronischen Hilfsnachricht an den beabsichtigten Empfänger nach Interaktion mit dem beabsichtigten Empfänger.

68. Computerlesbares Medium, das fassbar ein Programm von Befehlen verkörpert, die durch ein Rechengerät ausführbar sind, um ein Verfahren zum Behandeln eines von einem Anrufer an einen beabsichtigten Empfänger gerichteten Anrufes auszuführen, wobei dem beabsichtigten Empfänger eine Hilfsadresse zugeordnet ist, an der der beabsichtigte Empfänger elektronisch erreicht werden kann, wobei das Verfahren umfasst:
- dem Anrufer eine Gelegenheit geben, ein für den beabsichtigten Empfänger bestimmtes Sprachsegment aufzugeben;
- Empfangen des Sprachsegmentes von dem Anrufer;
- dem Anrufer eine Gelegenheit geben, eine dem Sprachsegment zugeordnete elektronische Hilfsnachricht aufzugeben, welche ebenfalls für den beabsichtigten Empfänger bestimmt ist;
- Empfangen der elektronischen Hilfsnachricht von dem Anrufer;
- Speichern einer das Sprachsegment und die elektronische Hilfsnachricht umfassenden, zusammengesetzten Nachricht in einem dem beabsichtigten Empfänger zugeordneten Briefkasten;
- Senden einer Abrufnachricht an die dem beabsichtigten Empfänger zugeordnete Hilfsadresse, wobei die Abrufnachricht die elektronische Hilfsnachricht enthält.

69. Ein Verfahren zur Ausführung durch ein Voicemailsystem zum Behandeln eines von einem Anrufer durchgeführten Anrufes, umfassend:
- dem Anrufer eine Gelegenheit geben, ein für den beabsichtigten Empfänger bestimmtes Sprachsegment aufzugeben;
- Empfangen des Sprachsegmentes von dem Anrufer;
- dem Anrufer eine Gelegenheit geben, eine dem Sprachsegment zugeordnete elektronische Hilfsnachricht aufzugeben, welche ebenfalls für den beabsichtigten Empfänger bestimmt ist;
- Empfangen der elektronischen Hilfsnachricht von dem Anrufer;
- Speichern einer das Sprachsegment und die elektronische Hilfsnachricht umfassenden, zusammengesetzten Nachricht in einem dem beabsichtigten Empfänger zugeordneten Briefkasten;;
- Freigeben eines der nachstehenden, Sprachsegment und elektronische Hilfsnachricht, an den beabsichtigten Empfänger nach einer Interaktion mit dem beabsichtigten Empfänger;
- Freigeben des anderen der nachstehenden, Sprachsegment und elektronische Hilfsnachricht, an den beabsichtigten Empfänger nur auf Anfrage des beabsichtigten Empfängers hin.

## Revendications

1. Procédé approprié pour exécuter un système de messagerie vocale afin de gérer un appel passé par un appelant, l'appelant étant associé à une adresse auxiliaire à laquelle l'appelant peut être joint électroniquement, ledit procédé comprenant :
- fourniture à l'appelant de l'occasion d'envoyer un segment vocal destiné à un destinataire voulu ;
- réception du segment vocal provenant de l'appelant ;
- transmission d'un message d'invitation à l'adresse auxiliaire associée à l'appelant, ledit message d'invitation étant destiné à fournir à l'appelant une occasion d'adresser un message électronique auxiliaire associé au segment vocal, le message électronique auxiliaire étant également destiné au destinataire voulu :
- réception du message électronique auxiliaire provenant de l'appelant ;
- sauvegarde dans une boîte postale associée au destinataire voulu d'un message combiné comprenant le segment vocal et le message électronique auxiliaire ;
- délivrance du message électronique auxiliaire au destinataire voulu par une interaction avec le destinataire voulu.

2. Procédé selon la revendication 1, dans lequel la transmission d'un message d'invitation à l'adresse auxiliaire associée à l'appelant est exécutée après avoir reçu le segment vocal provenant de l'appelant.

3. Procédé selon la revendication 1, dans lequel ladite fourniture à l'appelant de l'occasion d'envoyer un segment vocal à un destinataire voulu est mise en oeuvre après avoir reçu le message électronique auxiliaire provenant de l'appelant.

4. Procédé selon la revendication 1, dans lequel le message d'invitation est un message instantané.

5. Procédé selon la revendication 1, dans lequel le message d'invitation est un message email.

6. Procédé selon la revendication 1, dans lequel le message d'invitation est un message texte en temps réel.

7. Procédé selon la revendication 1, comprenant en outre la réception de l'adresse auxiliaire associée à l'appelant.

8. Procédé selon la revendication 7, dans lequel ladite réception de l'adresse auxiliaire associée à l'appelant comprend la consultation d'une base de données qui associe l'adresse auxiliaire de l'appelant à un numéro d'annuaire d'un dispositif utilisé par l'appelant pour passer l'appel.

9. Procédé selon la revendication 8, comprenant en outre l'obtention du numéro d'annuaire du dispositif utilisé par l'appelant pour passer l'appel.

10. Procédé selon la revendication 9, dans lequel le numéro d'annuaire du dispositif utilisé par l'appelant pour passer l'appel est obtenu par information de l'identification de la ligne appelante (ILA) associée à l'appel.

11. Procédé selon la revendication 10, dans lequel l'adresse auxiliaire associée à l'appelant comprend une adresse IP d'un appareil informatique en réseau.

12. Procédé selon la revendication 7, dans lequel l'adresse auxiliaire associée à l'appelant comprend une adresse d'un dispositif utilisé par l'appelant pour passer l'appel.

13. Procédé selon la revendication 12, comprenant en outre l'observation de paquets envoyés par le dispositif utilisé par l'appelant pour passer l'appel, et par conséquent pour prendre connaissance de l'adresse du dispositif utilisé par l'appelant pour passer l'appel.

14. Procédé selon la revendication 13, dans lequel ladite adresse est une adresse MAC d'un appareil informatique exécutant un client logiciel.

15. Procédé selon la revendication 13, dans lequel ladite adresse est une adresse IP d'un téléphone IP.

16. Procédé selon la revendication 13, dans lequel ladite adresse est un numéro de série électronique d'un dispositif sans fil.

17. Procédé selon la revendication 16, dans lequel ledit dispositif sans fil est au moins un élément parmi un téléphone portable et un assistant numérique personnel en réseau.

18. Procédé selon la revendication 7, dans lequel ladite réception de l'adresse auxiliaire associée à l'appelant comprend la consultation d'une base de données qui associe l'adresse auxiliaire de l'appelant à une adresse d'un téléphone IP utilisé par l'appelant pour passer l'appel.

19. Procédé selon la revendication 18, comprenant en outre l'observation de paquets envoyés par le téléphone IP utilisé par l'appelant pour passer l'appel, et par conséquent pour prendre connaissance de l'adresse du dispositif utilisé par l'appelant pour passer l'appel.

20. Procédé selon la revendication 19, dans lequel l'adresse auxiliaire associée à l'appelant comprend une adresse IP d'un appareil informatique en réseau.

21. Procédé selon la revendication 1, dans lequel le message d'invitation déclenche un dispositif utilisé par l'appelant pour afficher une fenêtre pop-up à l'intérieur de laquelle l'appelant peut envoyer le message électronique auxiliaire.

22. Procédé selon la revendication 1, dans lequel le message d'invitation déclenche un dispositif utilisé par l'appelant pour afficher une fenêtre de navigation au moyen de laquelle l'appelant peut envoyer le message électronique auxiliaire.

23. Procédé selon la revendication 1, dans lequel le message d'invitation déclenche un dispositif utilisé par l'appelant pour passer l'appel pour mettre en oeuvre une interface utilisateur graphique permettant à l'appelant d'envoyer le message électronique auxiliaire.

24. Procédé selon la revendication 1, comprenant en outre la réception d'un message de réponse suite au message d'invitation, le message de réponse contenant le message électronique auxiliaire.

25. Procédé selon la revendication 24, dans lequel le message électronique auxiliaire comprend du texte.

26. Procédé selon la revendication 25, dans lequel ledit texte comporte au moins un élément parmi un indicateur de contexte, un localisateur uniforme de ressource et un code alphanumérique.

27. Procédé selon la revendication 24, dans lequel ledit message électronique auxiliaire comprend un fichier.

28. Procédé selon la revendication 25, dans lequel ledit message électronique auxiliaire comprend un fichier.

29. Procédé selon la revendication 27, dans lequel ledit fichier comporte au moins un élément parmi une carte professionnelle électronique, un segment audio, un segment vidéo, du texte, des graphiques, des multimédias et une signature numérique.

30. Procédé selon la revendication 1, dans lequel le message combiné comprend un premier champ contenant le segment vocal et un second champ contenant le message électronique auxiliaire.

31. Procédé approprié pour exécuter un système de messagerie vocale afin de gérer un appel passé par un appelant à un destinataire voulu, le destinataire voulu étant associé à une adresse auxiliaire à laquelle le destinataire voulu peut être joint électroniquement, ledit procédé comprenant :
- fourniture à l'appelant de l'occasion d'envoyer un segment vocal destiné au destinataire voulu ;
- réception du segment vocal provenant de l'appelant ;
- fourniture à l'appelant de l'occasion d'adresser un message électronique auxiliaire associé au segment vocal, le message électronique auxiliaire étant également destiné au destinataire voulu ;
- réception du message électronique auxiliaire provenant de l'appelant ;
- sauvegarde dans une boîte postale associée au destinataire voulu d'un message combiné comprenant le segment vocal et le message électronique auxiliaire ;
- envoi d'un message de récupération à l'adresse auxiliaire associée au destinataire voulu, le message de récupération comprenant le message électronique auxiliaire.

32. Procédé selon la revendication 31, dans lequel l'envoi d'un message de récupération à l'adresse auxiliaire associée au destinataire voulu permet au destinataire voulu de déterminer un souhait de récupérer le segment vocal.

33. Procédé selon la revendication 31, dans lequel ledit envoi d'un message de récupération est mis en oeuvre en réponse à une authentification réussie du destinataire voulu.

34. Procédé selon la revendication 31, dans lequel le message de récupération est un message instantané.

35. Procédé selon la revendication 31, dans lequel le message de récupération est un message email.

36. Procédé selon la revendication 31, dans lequel le message de récupération est un message texte en temps réel.

37. Procédé selon la revendication 31, comprenant en outre la réception de l'adresse auxiliaire associée au destinataire voulu.

38. Procédé selon la revendication 37, dans lequel ladite réception de l'adresse auxiliaire associée au destinataire voulu comprend la consultation d'une base de données qui associe l'adresse auxiliaire du destinataire voulu à un numéro d'annuaire d'un dispositif utilisé par le destinataire voulu pour interagir avec le système de messagerie vocale.

39. Procédé selon la revendication 38, comprenant en outre la réception du numéro d'annuaire du dispositif utilisé par le destinataire voulu pour interagir avec le système de messagerie vocale.

40. Procédé selon la revendication 39, dans lequel le numéro d'annuaire du dispositif utilisé par le destinataire voulu pour interagir avec le système de messagerie vocale est obtenu par information de l'identification de la ligne appelante (ILA) générée en conséquence de l'interaction du destinataire voulu avec le système de messagerie vocale.

41. Procédé selon la revendication 40, dans lequel l'adresse auxiliaire associée au destinataire voulu comprend une adresse IP d'un appareil informatique en réseau.

42. Procédé selon la revendication 37, dans lequel l'adresse auxiliaire associée au destinataire voulu comprend une adresse d'un dispositif utilisé par le destinataire voulu pour interagir avec le système de messagerie vocale.

43. Procédé selon la revendication 42, comprenant en outre l'observation de paquets envoyés par le dispositif utilisé par le destinataire voulu pour interagir avec le système de messagerie vocale, et par conséquent pour prendre connaissance de l'adresse du dispositif utilisé par le destinataire voulu pour interagir avec le système de messagerie vocale.

44. Procédé selon la revendication 43, dans lequel ladite adresse est une adresse MAC d'un appareil informatique exécutant un client logiciel.

45. Procédé selon la revendication 43, dans lequel ladite adresse est une adresse IP d'un téléphone IP.

46. Procédé selon la revendication 43, dans lequel ladite adresse est un numéro de série électronique d'un dispositif sans fil.

47. Procédé selon la revendication 46, dans lequel ledit dispositif sans fil est au moins un élément parmi un téléphone portable et un assistant numérique personnel en réseau.

48. Procédé selon la revendication 37, dans lequel ladite réception de l'adresse auxiliaire associée au destinataire voulu comprend la consultation d'une base de données qui associe l'adresse auxiliaire associée au destinataire voulu à une adresse d'un téléphone IP utilisé par le destinataire voulu pour interagir avec le système de messagerie vocale.

49. Procédé selon la revendication 48, comprenant en outre l'observation de paquets envoyés par le téléphone IP utilisé par le destinataire voulu pour interagir avec le système de messagerie vocale, et par conséquent pour prendre connaissance de l'adresse du téléphone IP utilisé par le destinataire voulu pour interagir avec le système de messagerie vocale.

50. Procédé selon la revendication 49, dans lequel l'adresse auxiliaire associée au destinataire voulu comprend une adresse IP d'un appareil informatique en réseau.

51. Procédé selon la revendication 37, dans lequel ladite réception de l'adresse auxiliaire associée au destinataire voulu comprend la consultation d'une base de données qui associe la boîte postale associée au destinataire voulu à l'adresse auxiliaire du destinataire voulu.

52. Procédé selon la revendication 31, dans lequel le traitement du message de récupération sur un dispositif utilisé par le destinataire voulu pour interagir avec le système de messagerie vocale déclenche l'extraction du message électronique auxiliaire par ledit dispositif.

53. Procédé selon la revendication 52; dans lequel lorsque le message électronique auxiliaire comprend du texte, l'extraction du message électronique auxiliaire entraîne l'affichage dudit texte sur ledit dispositif.

54. Procédé selon la revendication 31, dans lequel le message de récupération comprend une pluralité de messages incluant le message électronique auxiliaire, dans lequel le traitement du message de récupération sur un dispositif utilisé par le destinataire voulu pour interagir avec le système de messagerie vocale déclenche l'extraction de la pluralité de messages par ledit dispositif et l'envoi de ladite pluralité de messages au destinataire voulu au moyen d'une interface utilisateur graphique.

55. Procédé selon la revendication 54, comprenant en outre la réception de la part du destinataire voulu du choix d'un message particulier parmi la pluralité de messages et l'envoi au destinataire voulu d'un segment vocal associé au message choisi.

56. Procédé selon la revendication 31, dans lequel l'envoi d'un message de récupération est mis en oeuvre en réponse à la réception d'un choix de la part du destinataire voulu identifiant le message combiné.

57. Procédé selon la revendication 56, dans lequel le choix est reçu d'un dispositif de téléphonie associé au destinataire voulu.

58. Procédé selon la revendication 56, dans lequel le choix est reçu d'un dispositif auxiliaire associé au destinataire voulu.

59. Procédé selon la revendication 31, comprenant en outre l'envoi à l'adresse auxiliaire associée au destinataire voulu d'une version révisée du message électronique auxiliaire, dans lequel ledit envoi d'un message de récupération n'est mis en oeuvre qu'en réponse à un message indicatif d'un choix de la version révisée du message électronique auxiliaire par le destinataire voulu.

60. Procédé selon la revendication 59, dans lequel le message électronique auxiliaire comprend un fichier comportant un segment image et dans lequel la version révisée du message électronique auxiliaire comprend un fichier comportant une vignette du segment image.

61. Procédé selon la revendication 59, dans lequel le message électronique auxiliaire comprend un fichier comportant un segment vidéo et dans lequel la version révisée du message électronique auxiliaire comprend un fichier comportant une vignette du segment vidéo.

62. Procédé selon la revendication 31, le message électronique auxiliaire étant un message électronique auxiliaire particulier, dans lequel le message de récupération comprend une pluralité de messages électroniques auxiliaires incluant le message électronique auxiliaire particulier.

63. Procédé selon la revendication 62, dans lequel le message de récupération déclenche un dispositif par le destinataire voulu pour interagir avec le système de messagerie vocale pour exécuter une interface de gestion de messages pour organiser visuellement la pluralité de messages électroniques auxiliaires.

64. Procédé selon la revendication 31, le message électronique auxiliaire étant un message électronique auxiliaire particulier, le segment vocal étant un segment vocal particulier, dans lequel ledit message de récupération comprend une pluralité de messages électroniques auxiliaires incluant le message électronique auxiliaire particulier et une pluralité de segments vocaux incluant le segment vocal particulier.

65. Procédé selon la revendication 64, dans lequel le message de récupération déclenche un dispositif utilisé par le destinataire voulu pour interagir avec le système de messagerie vocale pour exécuter une interface de gestion de messages pour organiser visuellement la pluralité de messages électroniques auxiliaires et la pluralité de segments vocaux.

66. Procédé selon la revendication 31, dans lequel le message électronique auxiliaire comporte un localisateur uniforme de ressource, dans lequel le message de récupération déclenche un dispositif utilisé par le destinataire voulu pour interagir avec le système de messagerie vocale pour exécuter une interface de gestion de messages afin de permettre que le localisateur uniforme de ressource puisse être actionné par le destinataire voulu.

67. Données lisibles par informatique comportant un programme d'instructions exécutables par un appareil informatique pour mettre en oeuvre un procédé de gestion d'un appel passé par un appelant, l'appelant étant associé à une adresse auxiliaire à laquelle l'appelant peut être joint électroniquement, le procédé comprenant :
- fourniture à l'appelant de l'occasion d'envoyer un segment vocal destiné à un destinataire voulu ;
- réception du segment vocal provenant de l'appelant ;
- transmission d'un message d'invitation à l'adresse auxiliaire associée à l'appelant, ledit message d'invitation étant destiné à fournir à l'appelant une occasion d'adresser un message électronique auxiliaire associé au segment vocal, le message électronique auxiliaire étant également destiné au destinataire voulu :
- réception du message électronique auxiliaire provenant de l'appelant ;
- sauvegarde dans une boîte postale associée au destinataire voulu d'un message combiné comprenant le segment vocal et le message électronique auxiliaire ;
- délivrance du message électronique auxiliaire au destinataire voulu par une interaction avec le destinataire voulu.

68. Données lisibles par informatique incorporant physiquement un programme d'instructions exécutables par un appareil informatique pour mettre en oeuvre un procédé de gestion d'un appel passé par un appelant à un destinataire voulu, le destinataire voulu étant associé à une adresse auxiliaire à laquelle le destinataire voulu peut être joint électroniquement, le procédé comprenant :
- fourniture à l'appelant de l'occasion d'envoyer un segment vocal destiné au destinataire voulu ;
- réception du segment vocal provenant de l'appelant ;
- fourniture à l'appelant de l'occasion d'adresser un message électronique auxiliaire associé au segment vocal, le message électronique auxiliaire étant également destiné au destinataire voulu ;
- réception du message électronique auxiliaire provenant de l'appelant ;
- sauvegarde dans une boîte postale associée au destinataire voulu d'un message combiné comprenant le segment vocal et le message électronique auxiliaire ;
- envoi d'un message de récupération à l'adresse auxiliaire associée au destinataire voulu, le message de récupération comprenant le message électronique auxiliaire ;

69. Procédé approprié pour exécuter un système de messagerie vocale afin de gérer un appel passé par un appelant, comprenant ;
- fourniture à l'appelant de l'occasion d'envoyer un segment vocal destiné à un destinataire voulu ;
- réception du segment vocal provenant de l'appelant ;
- fourniture à l'appelant de l'occasion d'adresser un message électronique auxiliaire associé au segment vocal, le message électronique auxiliaire étant également destiné au destinataire voulu ;
- réception du message électronique auxiliaire provenant de l'appelant ;
- sauvegarde dans une boîte postale associée au destinataire voulu d'un message combiné comprenant le segment vocal et le message électronique auxiliaire ;
- délivrance d'un élément parmi le segment vocal et le message électronique auxiliaire au destinataire voulu par une interaction avec le destinataire voulu ;
- délivrance de l'autre élément parmi le segment vocal et le message électronique auxiliaire au destinataire voulu par une interaction avec le destinataire voulu, seulement si le destinataire voulu en fait la demande.
